(19) **Europäisches Patentamt European Patent Office Office européen des brevets**

(11) **EP 4 254 114 B1**

(12) **EUROPEAN PATENT SPECIFICATION**

(45) Date of publication and mention of the grant of the patent:
**06.05.2026  Bulletin 2026/19**

(21) Application number: **23165382.5**

(22) Date of filing: **30.03.2023**

(51) International Patent Classification (IPC):
*G05B 23/02* (2006.01)       *G06N 3/0475* (2023.01)
*G06N 3/088* (2023.01)       *G06N 3/096* (2023.01)

(52) Cooperative Patent Classification (CPC):
**G05B 23/024; G05B 23/0221; G06N 3/045;
G06N 3/0475; G06N 3/088;** G06N 3/096

(54) **PREDICTIVE MODELING AND CONTROL SYSTEM FOR BUILDING EQUIPMENT WITH GENERATIVE ADVERSARIAL NETWORK**

PRÄDIKTIVES MODELLIERUNGS- UND STEUERUNGSSYSTEM FÜR EINE GEBÄUDEAUSRÜSTUNG MIT GENERATIVEM KONTRADIKTORISCHEM NETZWERK

SYSTÈME DE MODÉLISATION ET DE COMMANDE PRÉDICTIVE POUR ÉQUIPEMENT DE CONSTRUCTION AVEC RÉSEAU ANTAGONISTE GÉNÉRATIF

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **31.03.2022  US 202217710603**

(43) Date of publication of application:
**04.10.2023  Bulletin 2023/40**

(73) Proprietor: **Johnson Controls Tyco IP Holdings LLP**
**Milwaukee, WI 53209 (US)**

(72) Inventors:
  • **JIANG, Zhanhong**
    **Milwaukee, Wisconsin, 53202 (US)**
  • **RISBECK, Michael J.**
    **Madison, Wisconsin, 53703 (US)**
  • **LEE, Young M.**
    **Old Westbury, New York, 11568 (US)**
  • **KULANDAI SAMY, Santle Camilus**
    **Sunnyvale, California, 94089 (US)**
  • **ZHANG, Chenlu**
    **Milwaukee, Wisconsin, 53202 (US)**

(74) Representative: **Meissner Bolte Nürnberg Patentanwälte Rechtsanwälte Partnerschaft mbB**
    **Bankgasse 3**
    **90402 Nürnberg (DE)**

(56) References cited:
    **US-A1- 2021 279 597**

  • **DAN LI ET AL: "Anomaly Detection with Generative Adversarial Networks for Multivariate Time Series", ARXIV.ORG, CORNELL UNIVERSITY LIBRARY, 201 OLIN LIBRARY CORNELL UNIVERSITY ITHACA, NY 14853, 13 September 2018 (2018-09-13), XP081082458**

## Description

The present disclosure relates generally to building management systems. The present disclosure relates more particularly to fault detection for connected equipment in a building management system. A building management system (BMS) is, in general, a system of devices configured to control, monitor, and manage equipment in or around a building or building area. A BMS can include, for example, a HVAC system, a security system, a lighting system, a fire alerting system, any other system that is capable of managing building functions or devices, or any combination thereof.

Systems and devices in a BMS often generate temporal or time-series data that can be analyzed to determine the performance of the BMS and the various components thereof and/or predict future events such as faults, errors, malfunctions, etc. of the building equipment. For example, data can be examined and alert a user to repair the fault before it becomes more severe when the monitored system or process begins to degrade in performance, or to provide other advantageous technical benefits. However, many fault detection or prediction approaches are dependent on pre-existence of a robust set of historical data with multiple instances of different types of fault events. Such robust data is often not available in practice.

## SUMMARY

One implementation of the present disclosure is a method according to claim 1 for predicting faults in building equipment and initiating responsive actions. The method includes training a conditional generator by operating a generative adversarial network including the conditional generator, generating, by the conditional generator, synthetic timeseries data corresponding to a plurality of fault types. Labels for the plurality of fault types are used as inputs to the conditional generator. The method also includes training a fault prediction model using the synthetic timeseries data, predicting a fault for building equipment by applying the fault prediction model to real timeseries data relating to the building equipment; and initiating an automated action in response to predicting the fault for the building equipment.

In some embodiments, operating the generative adversarial network further includes creating, by an embedder, a representation of preprocessed training data having reduced dimensionality relative to the preprocessed training data, attempting, by a recovery, to reconstruct the preprocessed training data from the representation, and attempting, by a discriminator, to discriminate to determine whether the synthetic timeseries data is synthetic. In some embodiments, the method also includes receiving, by the embedder and the generator, the preprocessed training data, providing, by the generator, generated data to the discriminator, providing, by the embedder, a first output to the discriminator, providing, by the embedder, an a second output to the recovery. The method may include enabling, by the embedder, learning of temporal dynamics from a latent space. The method may include using, by the generative adversarial network, a reconstructed loss, a weakly supervised loss, and an unsupervised loss.

In some embodiments, training the conditional generator is based on first actual timeseries data for a first unit of building equipment. The method may also include updating the conditional generator for a second unit of building equipment by operating the generative adversarial network based on actual timeseries data for the second unit of building equipment.

In some embodiments, training the fault prediction model using the synthetic timeseries data includes ranking a plurality of sets of the synthetic timeseries data and selecting a highest ranked of the plurality of sets of the synthetic timeseries data for use in training the fault prediction model. In some embodiments, ranking the plurality of sets of the synthetic timeseries data includes comparing the plurality of sets of the synthetic timeseries data to historical training data.

In some embodiments, the automated action includes altering an internal operation of the building equipment to correct, mitigate, or prevent the fault. In some embodiments , the automated action includes altering a load on the building equipment to mitigate or prevent the fault. In some embodiments, the automated action includes performing maintenance on the building equipment to mitigate or prevent the fault.

Another implementation of the present disclosure is one or more non-transitory computer-readable media according to claim 10 which stores program instructions that, when executed by one or more processors, cause the one or more processors to execute operations. The operations include training a conditional generator by operating a generative adversarial network including the conditional generator and generating, by the conditional generator, synthetic timeseries data corresponding to a plurality of fault types. Labels for the plurality of fault types are used as inputs to the conditional generator. The operations can also include training a fault prediction model using the synthetic timeseries data and predicting a fault for building equipment by applying the fault prediction model to real timeseries data relating to the building equipment.

In some embodiments, the operations including creating, by an embedder, a representation of preprocessed training data having reduced dimensionality relative to the preprocessed training data, attempting, by a recovery, to reconstruct the preprocessed training data from the representation, and attempting, by a discriminator, to discriminate to determine whether the synthetic timeseries data is synthetic.

In some embodiments, the operations also include receiving, by the embedder and the generator, the preprocessed training data, providing, by the generator, generated data to the discriminator, providing, by the embedder, a first output to the discriminator, and providing, by the embedder, an a second output to the recovery. In some embodiments , the operations also include updating the conditional generator for a new unit of building equipment by operating the generative adversarial network based on actual timeseries data for the new unit of building equipment.

In some embodiments, training the fault prediction model using the synthetic timeseries data includes ranking a plurality of sets of the synthetic timeseries data and selecting a highest ranked of the plurality of sets of the synthetic timeseries data for use in training the fault prediction model. Ranking the plurality of sets of the synthetic timeseries data may include comparing the plurality of sets of the synthetic timeseries data to historical training data.

In some embodiments, the operations further comprise mitigating or preventing the fault by altering an internal operation of the building equipment, altering a load on the building equipment, or causing maintenance to be performed on the building equipment.

Another implementation of the present disclosure is a system. The system includes a unit of building equipment and computing hardware communicable with the unit of building equipment. The computing hardware is programmed to train a conditional generator by operating a generative adversarial network including the conditional generator, generate, using the conditional generator, synthetic timeseries data corresponding to a plurality of fault types. Labels for the plurality of fault types are used as inputs to the conditional generator. The computing hardware is also programmed to train a fault prediction model using the synthetic timeseries data, and predict a fault for building equipment by applying the fault prediction model to real timeseries data relating to the building equipment. The computer hardware may be further programmed to alter an operation of the unit of building equipment in response to a prediction of the fault.

Other aspects, inventive features, and advantages of the devices and/or processes described herein, as defined solely by the claims, will become apparent in the detailed description set forth herein and taken in conjunction with the accompanying drawings.

## BRIEF DESCRIPTION OF THE DRAWINGS

FIG. 1 is a drawing of a building equipped with a HVAC system, according to some embodiments.

FIG. 2 is a schematic diagram of a waterside system which can be used in conjunction with the building of FIG. 1, according to some embodiments.

FIG. 3 is a schematic diagram of an airside system which can be used in conjunction with the building of FIG. 1, according to some embodiments.

FIG. 4 is a block diagram of a building management system (BMS) which can be used to monitor and control the building of FIG. 1, according to some embodiments.

FIG. 5 is a block diagram of another BMS which can be used to monitor and control the building of FIG. 1 and includes a fault management system, according to some embodiments.

FIG. 6 is a block diagram of another BMS including the fault management system, according to some embodiments.

FIG. 7 is a block diagram of another BMS including the fault management system, according to some embodiments.

FIG. 8 is a block diagram of a system including a detailed view of the fault management system, according to some embodiments.

FIG. 9 is a block diagram of a training engine of the fault management system, according to some embodiments.

FIG. 10 is a block diagram of a generative adversarial network (GAN) of the training engine, according to some embodiments.

FIG. 11 is a block diagram of an inference architecture which can be used by the training engine of the fault management system, according to some embodiments.

FIG. 12 is a block diagram of a training architecture 1200 that can be used by the training engine of the fault management system, according to some embodiments.

FIG. 13 is a graph of experimental results, according to some embodiments and an example experiment.

## DETAILED DESCRIPTION

Following below are more detailed descriptions of various concepts related to, and implementations of, systems, methods, and apparatuses for generating time varying performance indications for connected equipment in a building management system. Before turning to the more detailed descriptions and figures, which illustrate the exemplary embodiments in detail, it should be understood that the application is not limited to the details or methodology set forth in the descriptions or illustrated in the figures. It should also be understood that the terminology is for the purpose of description only and should not be regarded as limiting in any way.

Building HVAC Systems and Building Management Systems

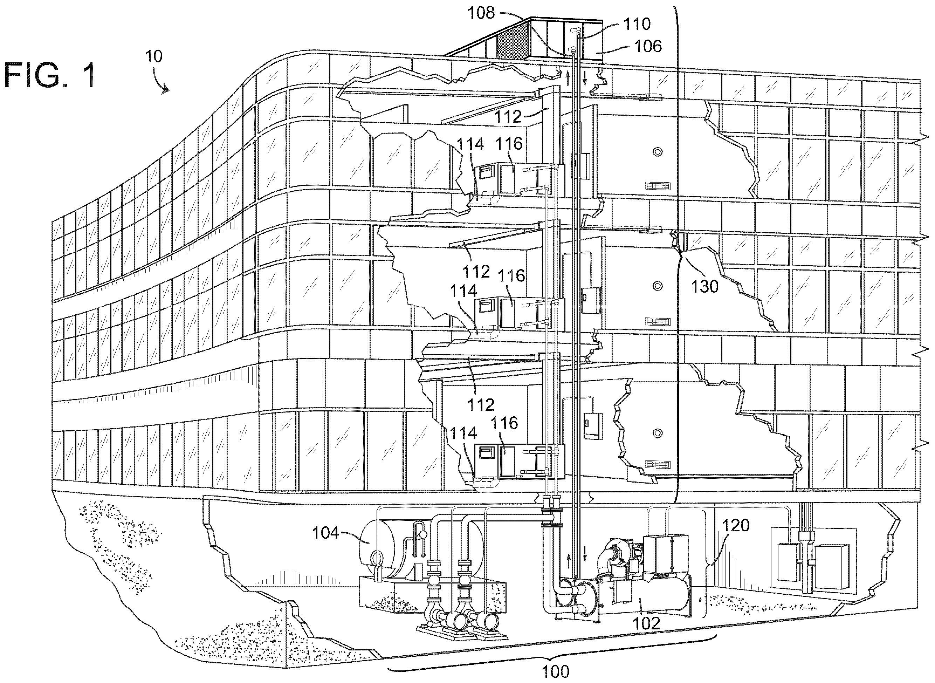

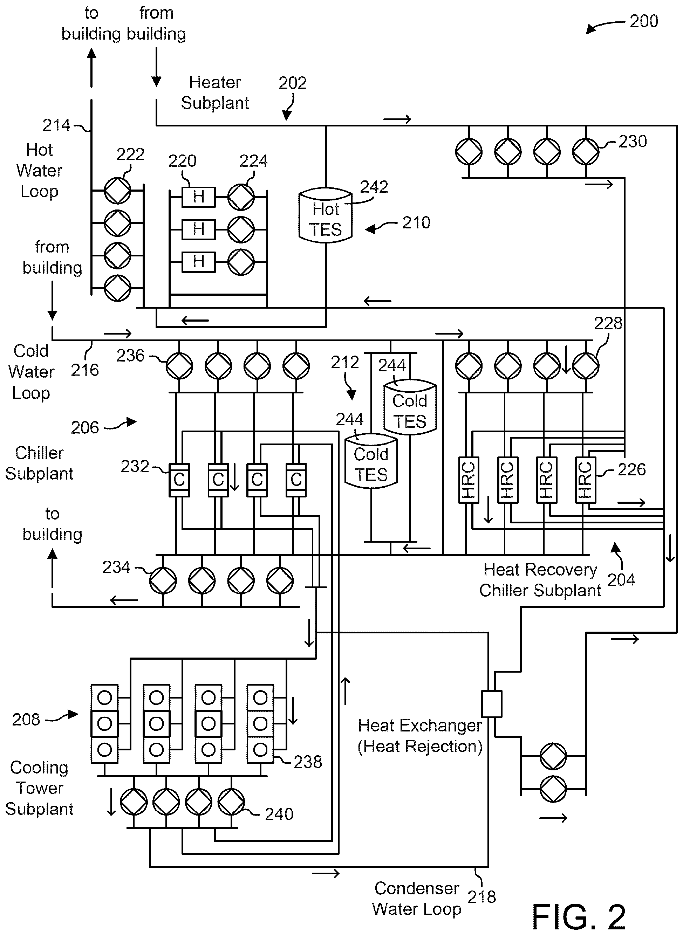

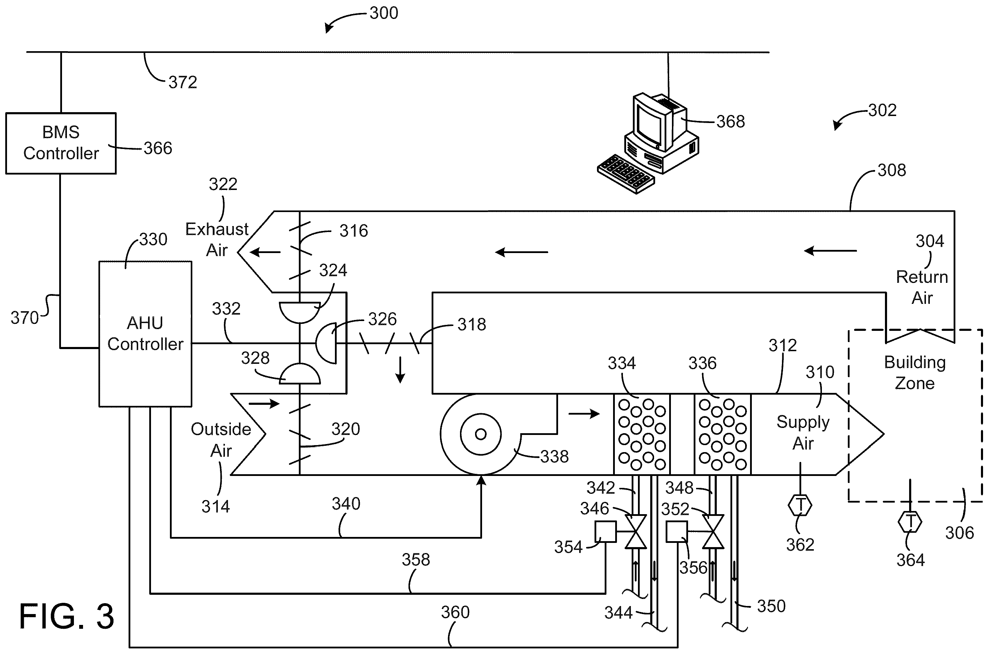

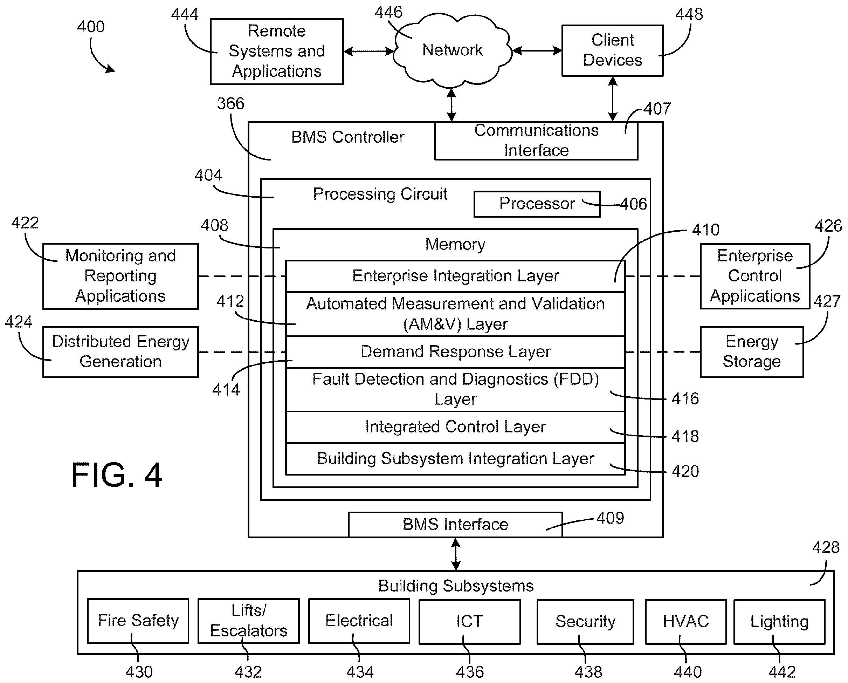

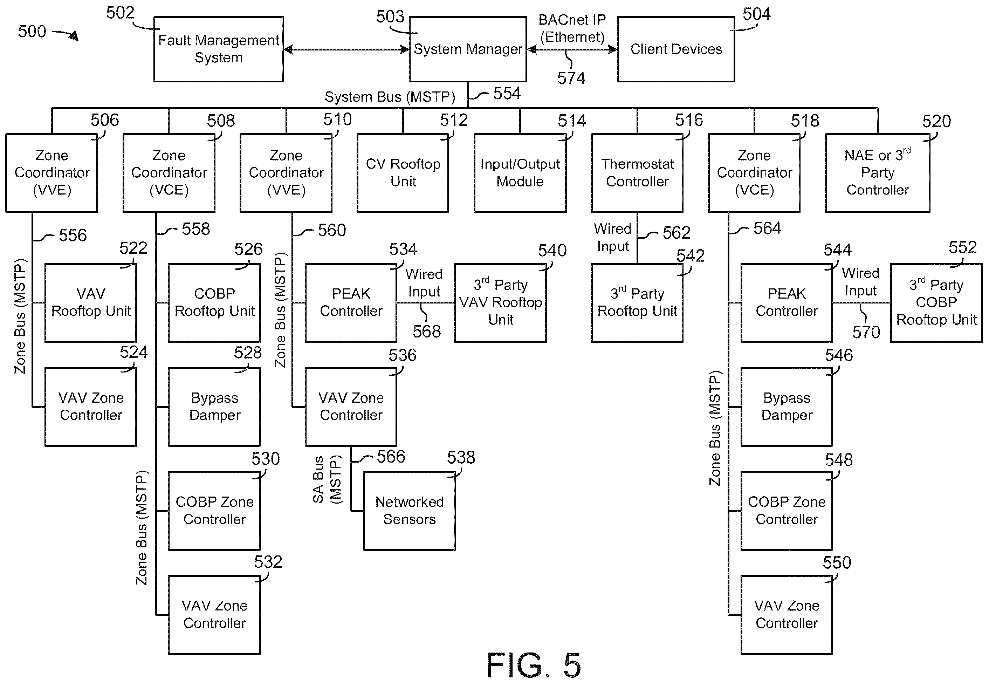

Referring now to FIGS. 1-5, several building management systems (BMS) and HVAC systems in which the systems and methods of the present disclosure can be implemented are shown, according to some embodiments. In brief overview, FIG. 1 shows a building 10 equipped with a HVAC system 100. FIG. 2 is a block diagram of a waterside system 200 which can be used to serve building 10. FIG. 3 is a block diagram of an airside system 300 which can be used to serve building 10. FIG. 4 is a block diagram of a BMS which can be used to monitor and control building 10. FIG. 5 is a block diagram of another BMS which can be used to monitor and control building 10.

Building 10 and HVAC System 100

Referring particularly to FIG. 1, a perspective view of building 10 is shown. Building 10 is served by a BMS. A BMS is, in general, a system of devices configured to control, monitor, and manage equipment in or around a building or building area. A BMS can include, for example, a HVAC system, a security system, a lighting system, a fire alerting system, any other system that is capable of managing building functions or devices, or any combination thereof.

The BMS that serves building 10 includes an HVAC system 100. HVAC system 100 can include a plurality of HVAC devices (e.g., heaters, chillers, air handling units, pumps, fans, thermal energy storage, etc.) configured to provide heating, cooling, ventilation, or other services for building 10. For example, HVAC system 100 is shown to include a waterside system 120 and an airside system 130. Waterside system 120 may provide a heated or chilled fluid to an air handling unit of airside system 130. Airside system 130 may use the heated or chilled fluid to heat or cool an airflow provided to building 10. An exemplary waterside system and airside system which can be used in HVAC system 100 are described in greater detail with reference to FIGS. 2 and 3.

HVAC system 100 is shown to include a chiller 102, a boiler 104, and a rooftop air handling unit (AHU) 106. Waterside system 120 may use boiler 104 and chiller 102 to heat or cool a working fluid (e.g., water, glycol, etc.) and may circulate the working fluid to AHU 106. In various embodiments, the HVAC devices of waterside system 120 can be located in or around building 10 (as shown in FIG. 1) or at an offsite location such as a central plant (e.g., a chiller plant, a steam plant, a heat plant, etc.). The working fluid can be heated in boiler 104 or cooled in chiller 102, depending on whether heating or cooling is required in building 10. Boiler 104 may add heat to the circulated fluid, for example, by burning a combustible material (e.g., natural gas) or using an electric heating element. Chiller 102 may place the circulated fluid in a heat exchange relationship with another fluid (e.g., a refrigerant) in a heat exchanger (e.g., an evaporator) to absorb heat from the circulated fluid. The working fluid from chiller 102 and/or boiler 104 can be transported to AHU 106 via piping 108.

AHU 106 may place the working fluid in a heat exchange relationship with an airflow passing through AHU 106 (e.g., via one or more stages of cooling coils and/or heating coils). The airflow can be, for example, outside air, return air from within building 10, or a combination of both. AHU 106 may transfer heat between the airflow and the working fluid to provide heating or cooling for the airflow. For example, AHU 106 can include one or more fans or blowers configured to pass the airflow over or through a heat exchanger containing the working fluid. The working fluid may then return to chiller 102 or boiler 104 via piping 110.

Airside system 130 may deliver the airflow supplied by AHU 106 (i.e., the supply airflow) to building 10 via air supply ducts 112 and may provide return air from building 10 to AHU 106 via air return ducts 114. In some embodiments, airside system 130 includes multiple variable air volume (VAV) units 116. For example, airside system 130 is shown to include a separate VAV unit 116 on each floor or zone of building 10. VAV units 116 can include dampers or other flow control elements that can be operated to control an amount of the supply airflow provided to individual zones of building 10. In other embodiments, airside system 130 delivers the supply airflow into one or more zones of building 10 (e.g., via supply ducts 112) without using intermediate VAV units 116 or other flow control elements. AHU 106 can include various sensors (e.g., temperature sensors, pressure sensors, etc.) configured to measure attributes of the supply airflow. AHU 106 may receive input from sensors located within AHU 106 and/or within the building zone and may adjust the flow rate, temperature, or other attributes of the supply airflow through AHU 106 to achieve setpoint conditions for the building zone.

Waterside System 200

Referring now to FIG. 2, a block diagram of a waterside system 200 is shown, according to some embodiments. In various embodiments, waterside system 200 may supplement or replace waterside system 120 in HVAC system 100 or can be implemented separate from HVAC system 100. When implemented in HVAC system 100, waterside system 200 can include a subset of the HVAC devices in HVAC system 100 (e.g., boiler 104, chiller 102, pumps, valves, etc.) and may operate to supply a heated or chilled fluid to AHU 106. The HVAC devices of waterside system 200 can be located within building 10 (e.g., as components of waterside system 120) or at an offsite location such as a central plant.

In FIG. 2, waterside system 200 is shown as a central plant having a plurality of subplants 202-212. Subplants 202-212 are shown to include a heater subplant 202, a heat recovery chiller subplant 204, a chiller subplant 206, a cooling tower subplant 208, a hot thermal energy storage (TES) subplant 210, and a cold thermal energy storage (TES) subplant 212. Subplants 202-212 consume resources (e.g., water, natural gas, electricity, etc.) from utilities to serve thermal energy loads (e.g., hot water, cold water, heating, cooling, etc.) of a building or campus. For example, heater subplant 202 can be configured to heat water in a hot water loop 214 that circulates the hot water between heater subplant 202 and building 10. Chiller subplant 206 can be configured to chill water in a cold water loop 216 that circulates the cold water between chiller subplant 206 building 10. Heat recovery chiller subplant 204 can be configured to transfer heat from cold water loop 216 to hot water loop 214 to provide additional heating for the hot water and additional cooling for the cold water.

Condenser water loop 218 may absorb heat from the cold water in chiller subplant 206 and reject the absorbed heat in cooling tower subplant 208 or transfer the absorbed heat to hot water loop 214. Hot TES subplant 210 and cold TES subplant 212 may store hot and cold thermal energy, respectively, for subsequent use.

Hot water loop 214 and cold water loop 216 may deliver the heated and/or chilled water to air handlers located on the rooftop of building 10 (e.g., AHU 106) or to individual floors or zones of building 10 (e.g., VAV units 116). The air handlers push air past heat exchangers (e.g., heating coils or cooling coils) through which the water flows to provide heating or cooling for the air. The heated or cooled air can be delivered to individual zones of building 10 to serve thermal energy loads of building 10. The water then returns to subplants 202-212 to receive further heating or cooling.

Although subplants 202-212 are shown and described as heating and cooling water for circulation to a building, it is understood that any other type of working fluid (e.g., glycol, CO2, etc.) can be used in place of or in addition to water to serve thermal energy loads. In other embodiments, subplants 202-212 may provide heating and/or cooling directly to the building or campus without requiring an intermediate heat transfer fluid. These and other variations to waterside system 200 are within the teachings of the present invention.

Each of subplants 202-212 can include a variety of equipment configured to facilitate the functions of the subplant. For example, heater subplant 202 is shown to include a plurality of heating elements 220 (e.g., boilers, electric heaters, etc.) configured to add heat to the hot water in hot water loop 214. Heater subplant 202 is also shown to include several pumps 222 and 224 configured to circulate the hot water in hot water loop 214 and to control the flow rate of the hot water through individual heating elements 220. Chiller subplant 206 is shown to include a plurality of chillers 232 configured to remove heat from the cold water in cold water loop 216. Chiller subplant 206 is also shown to include several pumps 234 and 236 configured to circulate the cold water in cold water loop 216 and to control the flow rate of the cold water through individual chillers 232.

Heat recovery chiller subplant 204 is shown to include a plurality of heat recovery heat exchangers 226 (e.g., refrigeration circuits) configured to transfer heat from cold water loop 216 to hot water loop 214. Heat recovery chiller subplant 204 is also shown to include several pumps 228 and 230 configured to circulate the hot water and/or cold water through heat recovery heat exchangers 226 and to control the flow rate of the water through individual heat recovery heat exchangers 226. Cooling tower subplant 208 is shown to include a plurality of cooling towers 238 configured to remove heat from the condenser water in condenser water loop 218. Cooling tower subplant 208 is also shown to include several pumps 240 configured to circulate the condenser water in condenser water loop 218 and to control the flow rate of the condenser water through individual cooling towers 238.

Hot TES subplant 210 is shown to include a hot TES tank 242 configured to store the hot water for later use. Hot TES subplant 210 may also include one or more pumps or valves configured to control the flow rate of the hot water into or out of hot TES tank 242. Cold TES subplant 212 is shown to include cold TES tanks 244 configured to store the cold water for later use. Cold TES subplant 212 may also include one or more pumps or valves configured to control the flow rate of the cold water into or out of cold TES tanks 244.

In some embodiments, one or more of the pumps in waterside system 200 (e.g., pumps 222, 224, 228, 230, 234, 236, and/or 240) or pipelines in waterside system 200 include an isolation valve associated therewith. Isolation valves can be integrated with the pumps or positioned upstream or downstream of the pumps to control the fluid flows in waterside system 200. In various embodiments, waterside system 200 can include more, fewer, or different types of devices and/or subplants based on the particular configuration of waterside system 200 and the types of loads served by waterside system 200.

Airside System 300

Referring now to FIG. 3, a block diagram of an airside system 300 is shown, according to some embodiments. In various embodiments, airside system 300 may supplement or replace airside system 130 in HVAC system 100 or can be implemented separate from HVAC system 100. When implemented in HVAC system 100, airside system 300 can include a subset of the HVAC devices in HVAC system 100 (e.g., AHU 106, VAV units 116, ducts 112-114, fans, dampers, etc.) and can be located in or around building 10. Airside system 300 may operate to heat or cool an airflow provided to building 10 using a heated or chilled fluid provided by waterside system 200.

In FIG. 3, airside system 300 is shown to include an economizer-type air handling unit (AHU) 302. Economizer-type AHUs vary the amount of outside air and return air used by the air handling unit for heating or cooling. For example, AHU 302 may receive return air 304 from building zone 306 via return air duct 308 and may deliver supply air 310 to building zone 306 via supply air duct 312. In some embodiments, AHU 302 is a rooftop unit located on the roof of building 10 (e.g., AHU 106 as shown in FIG. 1) or otherwise positioned to receive both return air 304 and outside air 314. AHU 302 can be configured to operate exhaust air damper 316, mixing damper 318, and outside air damper 320 to control an amount of outside air 314 and return air 304 that combine to form supply air 310. Any return air 304 that does not pass through mixing damper 318 can be exhausted from AHU 302 through exhaust damper 316 as exhaust air 322.

Each of dampers 316-320 can be operated by an actuator. For example, exhaust air damper 316 can be operated by actuator 324, mixing damper 318 can be operated by actuator 326, and outside air damper 320 can be operated by actuator 328. Actuators 324-328 may communicate with an AHU controller 330 via a communications link 332. Actuators 324-328 may receive control signals from AHU controller 330 and may provide feedback signals to AHU controller 330. Feedback signals can include, for example, an indication of a current actuator or damper position, an amount of torque or force exerted by the actuator, diagnostic information (e.g., results of diagnostic tests performed by actuators 324-328), status information, commissioning information, configuration settings, calibration data, and/or other types of information or data that can be collected, stored, or used by actuators 324-328. AHU controller 330 can be an economizer controller configured to use one or more control algorithms (e.g., state-based algorithms, extremum seeking control (ESC) algorithms, proportional-integral (PI) control algorithms, proportional-integral-derivative (PID) control algorithms, model predictive control (MPC) algorithms, feedback control algorithms, etc.) to control actuators 324-328.

Still referring to FIG. 3, AHU 302 is shown to include a cooling coil 334, a heating coil 336, and a fan 338 positioned within supply air duct 312. Fan 338 can be configured to force supply air 310 through cooling coil 334 and/or heating coil 336 and provide supply air 310 to building zone 306. AHU controller 330 may communicate with fan 338 via communications link 340 to control a flow rate of supply air 310. In some embodiments, AHU controller 330 controls an amount of heating or cooling applied to supply air 310 by modulating a speed of fan 338.

Cooling coil 334 may receive a chilled fluid from waterside system 200 (e.g., from cold water loop 216) via piping 342 and may return the chilled fluid to waterside system 200 via piping 344. Valve 346 can be positioned along piping 342 or piping 344 to control a flow rate of the chilled fluid through cooling coil 334. In some embodiments, cooling coil 334 includes multiple stages of cooling coils that can be independently activated and deactivated (e.g., by AHU controller 330, by BMS controller 366, etc.) to modulate an amount of cooling applied to supply air 310.

Heating coil 336 may receive a heated fluid from waterside system 200 (e.g., from hot water loop 214) via piping 348 and may return the heated fluid to waterside system 200 via piping 350. Valve 352 can be positioned along piping 348 or piping 350 to control a flow rate of the heated fluid through heating coil 336. In some embodiments, heating coil 336 includes multiple stages of heating coils that can be independently activated and deactivated (e.g., by AHU controller 330, by BMS controller 366, etc.) to modulate an amount of heating applied to supply air 310.

Each of valves 346 and 352 can be controlled by an actuator. For example, valve 346 can be controlled by actuator 354 and valve 352 can be controlled by actuator 356. Actuators 354-356 may communicate with AHU controller 330 via communications links 358-360. Actuators 354-356 may receive control signals from AHU controller 330 and may provide feedback signals to controller 330. In some embodiments, AHU controller 330 receives a measurement of the supply air temperature from a temperature sensor 362 positioned in supply air duct 312 (e.g., downstream of cooling coil 334 and/or heating coil 336). AHU controller 330 may also receive a measurement of the temperature of building zone 306 from a temperature sensor 364 located in building zone 306.

In some embodiments, AHU controller 330 operates valves 346 and 352 via actuators 354-356 to modulate an amount of heating or cooling provided to supply air 310 (e.g., to achieve a setpoint temperature for supply air 310 or to maintain the temperature of supply air 310 within a setpoint temperature range). The positions of valves 346 and 352 affect the amount of heating or cooling provided to supply air 310 by cooling coil 334 or heating coil 336 and may correlate with the amount of energy consumed to achieve a desired supply air temperature. AHU 330 may control the temperature of supply air 310 and/or building zone 306 by activating or deactivating coils 334-336, adjusting a speed of fan 338, or a combination of both.

Still referring to FIG. 3, airside system 300 is shown to include a building management system (BMS) controller 366 and a client device 368. BMS controller 366 can include one or more computer systems (e.g., servers, supervisory controllers, subsystem controllers, etc.) that serve as system level controllers, application or data servers, head nodes, or master controllers for airside system 300, waterside system 200, HVAC system 100, and/or other controllable systems that serve building 10. BMS controller 366 may communicate with multiple downstream building systems or subsystems (e.g., HVAC system 100, a security system, a lighting system, waterside system 200, etc.) via a communications link 370 according to like or disparate protocols (e.g., LON, BACnet, etc.). In various embodiments, AHU controller 330 and BMS controller 366 can be separate (as shown in FIG. 3) or integrated. In an integrated implementation, AHU controller 330 can be a software module configured for execution by a processor of BMS controller 366.

In some embodiments, AHU controller 330 receives information from BMS controller 366 (e.g., commands, setpoints, operating boundaries, etc.) and provides information to BMS controller 366 (e.g., temperature measurements, valve or actuator positions, operating statuses, diagnostics, etc.). For example, AHU controller 330 may provide BMS controller 366 with temperature measurements from temperature sensors 362-364, equipment on/off states, equipment operating capacities, and/or any other information that can be used by BMS controller 366 to monitor or control a variable state or condition within building zone 306.

Client device 368 can include one or more human-machine interfaces or client interfaces (e.g., graphical user interfaces, reporting interfaces, text-based computer interfaces, client-facing web services, web servers that provide pages to web clients, etc.) for controlling, viewing, or otherwise interacting with HVAC system 100, its subsystems, and/or devices. Client device 368 can be a computer workstation, a client terminal, a remote or local interface, or any other type of user interface device. Client device 368 can be a stationary terminal or a mobile device. For example, client device 368 can be a desktop computer, a computer server with a user interface, a laptop computer, a tablet, a smartphone, a PDA, or any other type of mobile or non-mobile device. Client device 368 may communicate with BMS controller 366 and/or AHU controller 330 via communications link 372

Building Management System 400

Referring now to FIG. 4, a block diagram of a building management system (BMS) 400 is shown, according to some embodiments. BMS 400 can be implemented in building 10 to automatically monitor and control various building functions. BMS 400 is shown to include BMS controller 366 and a plurality of building subsystems 428. Building subsystems 428 are shown to include a building electrical subsystem 434, an information communication technology (ICT) subsystem 436, a security subsystem 438, a HVAC subsystem 440, a lighting subsystem 442, a lift/escalators subsystem 432, and a fire safety subsystem 430. In various embodiments, building subsystems 428 can include fewer, additional, or alternative subsystems. For example, building subsystems 428 may also or alternatively include a refrigeration subsystem, an advertising or signage subsystem, a cooking subsystem, a vending subsystem, a printer or copy service subsystem, or any other type of building subsystem that uses controllable equipment and/or sensors to monitor or control building 10. In some embodiments, building subsystems 428 include waterside system 200 and/or airside system 300, as described with reference to FIGS. 2 and 3.

Each of building subsystems 428 can include any number of devices, controllers, and connections for completing its individual functions and control activities. HVAC subsystem 440 can include many of the same components as HVAC system 100, as described with reference to FIGS. 1-3. For example, HVAC subsystem 440 can include a chiller, a boiler, any number of air handling units, economizers, field controllers, supervisory controllers, actuators, temperature sensors, thermostats, and other devices for controlling the temperature, humidity, airflow, or other variable conditions within building 10. Lighting subsystem 442 can include any number of light fixtures, ballasts, lighting sensors, dimmers, and/or other devices configured to controllably adjust the amount of light provided to a building space. Security subsystem 438 can include occupancy sensors, video surveillance cameras, digital video recorders, video processing servers, intrusion detection devices, access control devices and servers, and/or other security-related devices.

Still referring to FIG. 4, BMS controller 366 is shown to include a communications interface 407 and a BMS interface 409. Communications interface 407 may facilitate communications between BMS controller 366 and external applications (e.g., monitoring and reporting applications 422, enterprise control applications 426, remote systems and applications 444, applications residing on client devices 448, etc.) for allowing user control, monitoring, and adjustment to BMS controller 366 and/or subsystems 428. Communications interface 407 may also facilitate communications between BMS controller 366 and client devices 448. BMS interface 409 may facilitate communications between BMS controller 366 and building subsystems 428 (e.g., HVAC, lighting security, lifts, power distribution, business, etc.).

Communications interfaces 407 and/or BMS interface 409 can be or include wired or wireless communications interfaces (e.g., jacks, antennas, transmitters, receivers, transceivers, wire terminals, etc.) for conducting data communications with building subsystems 428 or other external systems or devices. In various embodiments, communications via communications interfaces 407 and/or BMS interface 409 can be direct (e.g., local wired or wireless communications) or via a communications network 446 (e.g., a WAN, the Internet, a cellular network, etc.). For example, communications interfaces 407 and/or BMS interface 409 can include an Ethernet card and port for sending and receiving data via an Ethernet-based communications link or network. In another example, communications interfaces 407 and/or BMS interface 409 can include a Wi-Fi transceiver for communicating via a wireless communications network. In another example, one or both of communications interfaces 407 and BMS interface 409 can include cellular or mobile phone communications transceivers. In one embodiment, communications interface 407 is a power line communications interface and BMS interface 409 is an Ethernet interface. In other embodiments, both communications interface 407 and BMS interface 409 are Ethernet interfaces or are the same Ethernet interface.

Still referring to FIG. 4, BMS controller 366 is shown to include a processing circuit 404 including a processor 406 and memory 408. Processing circuit 404 can be communicably connected to BMS interface 409 and/or communications interface 407 such that processing circuit 404 and the various components thereof can send and receive data via communications interfaces 407 and/or BMS interface 409. Processor 406 can be implemented as a general purpose processor, an application specific integrated circuit (ASIC), one or more field programmable gate arrays (FPGAs), a group of processing components, or other suitable electronic processing components.

Memory 408 (e.g., memory, memory unit, storage device, etc.) can include one or more devices (e.g., RAM, ROM, Flash memory, hard disk storage, etc.) for storing data and/or computer code for completing or facilitating the various processes, layers and modules described in the present application. Memory 408 can be or include volatile memory or non-volatile memory. Memory 408 can include database components, object code components, script components, or any other type of information structure for supporting the various activities and information structures described in the present application. According to some embodiments, memory 408 is communicably connected to processor 406 via processing circuit 404 and includes computer code for executing (e.g., by processing circuit 404 and/or processor 406) one or more processes described herein.

In some embodiments, BMS controller 366 is implemented within a single computer (e.g., one server, one housing, etc.). In various other embodiments BMS controller 366 can be distributed across multiple servers or computers (e.g., that can exist in distributed locations). Further, while FIG. 4 shows applications 422 and 426 as existing outside of BMS controller 366, in some embodiments, applications 422 and 426 can be hosted within BMS controller 366 (e.g., within memory 408).

Still referring to FIG. 4, memory 408 is shown to include an enterprise integration layer 410, an automated measurement and validation (AM&V) layer 412, a demand response (DR) layer 414, a fault detection and diagnostics (FDD) layer 416, an integrated control layer 418, and a building subsystem integration later 420. Layers 410-420 can be configured to receive inputs from building subsystems 428 and other data sources, determine optimal control actions for building subsystems 428 based on the inputs, generate control signals based on the optimal control actions, and provide the generated control signals to building subsystems 428. The following paragraphs describe some of the general functions performed by each of layers 410-420 in BMS 400.

Enterprise integration layer 410 can be configured to serve clients or local applications with information and services to support a variety of enterprise-level applications. For example, enterprise control applications 426 can be configured to provide subsystem-spanning control to a graphical user interface (GUI) or to any number of enterprise-level business applications (e.g., accounting systems, user identification systems, etc.). Enterprise control applications 426 may also or alternatively be configured to provide configuration GUIs for configuring BMS controller 366. In yet other embodiments, enterprise control applications 426 can work with layers 410-420 to optimize building performance (e.g., efficiency, energy use, comfort, or safety) based on inputs received at communications interface 407 and/or BMS interface 409.

Building subsystem integration layer 420 can be configured to manage communications between BMS controller 366 and building subsystems 428. For example, building subsystem integration layer 420 may receive sensor data and input signals from building subsystems 428 and provide output data and control signals to building subsystems 428. Building subsystem integration layer 420 may also be configured to manage communications between building subsystems 428. Building subsystem integration layer 420 translate communications (e.g., sensor data, input signals, output signals, etc.) across a plurality of multi-vendor/multi-protocol systems.

Demand response layer 414 can be configured to optimize resource usage (e.g., electricity use, natural gas use, water use, etc.) and/or the monetary cost of such resource usage in response to satisfy the demand of building 10. The optimization can be based on time-of-use prices, curtailment signals, energy availability, or other data received from utility providers, distributed energy generation systems 424, from energy storage 427 (e.g., hot TES 242, cold TES 244, etc.), or from other sources. Demand response layer 414 may receive inputs from other layers of BMS controller 366 (e.g., building subsystem integration layer 420, integrated control layer 418, etc.). The inputs received from other layers can include environmental or sensor inputs (e.g., internal to building 10, external to building 10, etc.) such as temperature, carbon dioxide levels, relative humidity levels, air quality sensor outputs, occupancy sensor outputs, room schedules, weather conditions, and the like. The inputs may also include inputs such as electrical use (e.g., expressed in kWh), thermal load measurements, pricing information, projected pricing, smoothed pricing, curtailment signals from utilities, and the like.

According to some embodiments, demand response layer 414 includes control logic for responding to the data and signals it receives. These responses can include communicating with the control algorithms in integrated control layer 418, changing control strategies, changing setpoints, or activating/deactivating building equipment or subsystems in a controlled manner. Demand response layer 414 may also include control logic configured to determine when to utilize stored energy. For example, demand response layer 414 may determine to begin using energy from energy storage 427 just prior to the beginning of a peak use hour.

In some embodiments, demand response layer 414 includes a control module configured to actively initiate control actions (e.g., automatically changing setpoints, etc.) which minimize energy costs based on one or more inputs representative of or based on demand (e.g., price, a curtailment signal, a demand level, etc.). In some embodiments, demand response layer 414 uses equipment models to determine an optimal set of control actions. The equipment models can include, for example, thermodynamic models describing the inputs, outputs, and/or functions performed by various sets of building equipment. Equipment models may represent collections of building equipment (e.g., subplants, chiller arrays, etc.) or individual devices (e.g., individual chillers, heaters, pumps, etc.).

Demand response layer 414 may further include or draw upon one or more demand response policy definitions (e.g., databases, XML files, etc.). The policy definitions can be edited or adjusted by a user (e.g., via a graphical user interface, etc.) so that the control actions initiated in response to demand inputs can be tailored for the user's application, desired comfort level, particular building equipment, and/or based on other concerns. For example, the demand response policy definitions can specify which equipment can be turned on or off in response to particular demand inputs, how long a system or piece of equipment should be turned off, what setpoints can be changed, what the allowable set point adjustment range is, how long to hold a high demand setpoint before returning to a normally scheduled setpoint, how close to approach capacity limits, which equipment modes to utilize, the energy transfer rates (e.g., the maximum rate, an alarm rate, other rate boundary information, etc.) into and out of energy storage devices (e.g., thermal storage tanks, battery banks, etc.), and/or when to dispatch on-site generation of energy (e.g., via fuel cells, a motor generator set, etc.).

Integrated control layer 418 can be configured to use the data input or output of building subsystem integration layer 420 and/or demand response later 414 to make control decisions. Due to the subsystem integration provided by building subsystem integration layer 420, integrated control layer 418 can integrate control activities of the subsystems 428 such that the subsystems 428 behave as a single integrated supersystem. In some embodiments, integrated control layer 418 includes control logic that uses inputs and outputs from a plurality of building subsystems to provide greater comfort and energy savings relative to the comfort and energy savings that separate subsystems could provide alone. For example, integrated control layer 418 can be configured to use an input from a first subsystem to make an energy-saving control decision for a second subsystem. Results of these decisions can be communicated back to building subsystem integration layer 420.

Integrated control layer 418 is shown to be logically below demand response layer 414. Integrated control layer 418 can be configured to enhance the effectiveness of demand response layer 414 by enabling building subsystems 428 and their respective control loops to be controlled in coordination with demand response layer 414. This configuration may advantageously reduce disruptive demand response behavior relative to conventional systems. For example, integrated control layer 418 can be configured to assure that a demand response-driven upward adjustment to the setpoint for chilled water temperature (or another component that directly or indirectly affects temperature) does not result in an increase in fan energy (or other energy used to cool a space) that would result in greater total building energy use than was saved at the chiller. Integrated control layer 418 can be configured to provide feedback to demand response layer 414 so that demand response layer 414 checks that constraints (e.g., temperature, lighting levels, etc.) are properly maintained even while demanded load shedding is in progress. The constraints may also include setpoint or sensed boundaries relating to safety, equipment operating limits and performance, comfort, fire codes, electrical codes, energy codes, and the like. Integrated control layer 418 is also logically below fault detection and diagnostics layer 416 and automated measurement and validation layer 412. Integrated control layer 418 can be configured to provide calculated inputs (e.g., aggregations) to these higher levels based on outputs from more than one building subsystem.

Automated measurement and validation (AM&V) layer 412 can be configured to verify that control strategies commanded by integrated control layer 418 or demand response layer 414 are working properly (e.g., using data aggregated by AM&V layer 412, integrated control layer 418, building subsystem integration layer 420, FDD layer 416, or otherwise). The calculations made by AM&V layer 412 can be based on building system energy models and/or equipment models for individual BMS devices or subsystems. For example, AM&V layer 412 may compare a model-predicted output with an actual output from building subsystems 428 to determine an accuracy of the model.

Fault detection and diagnostics (FDD) layer 416 can be configured to provide ongoing fault detection for building subsystems 428, building subsystem devices (i.e., building equipment), and control algorithms used by demand response layer 414 and integrated control layer 418. FDD layer 416 may receive data inputs from integrated control layer 418, directly from one or more building subsystems or devices, and/or from another data source. FDD layer 416 may automatically diagnose and respond to detected faults. The responses to detected or diagnosed faults can include providing an alert message to a user, a maintenance scheduling system, or a control algorithm configured to attempt to repair the fault or to work-around the fault.

FDD layer 416 can be configured to output a specific identification of the faulty component or cause of the fault (e.g., loose damper linkage, etc.) using detailed subsystem inputs available at building subsystem integration layer 420. In other exemplary embodiments, FDD layer 416 is configured to provide "fault" events to integrated control layer 418 which executes control strategies and policies in response to the received fault events. According to some embodiments, FDD layer 416 (or a policy executed by an integrated control engine or business rules engine) may shut-down systems or direct control activities around faulty devices or systems to reduce energy waste, extend equipment life, or assure proper control response.

FDD layer 416 can be configured to store or access a variety of different system data stores (or data points for live data). FDD layer 416 may use some content of the data stores to identify faults at the equipment level (e.g., specific chiller, specific AHU, specific terminal unit, etc.) and other content to identify faults at component or subsystem levels. For example, building subsystems 428 may generate temporal (i.e., time-series) data indicating the performance of BMS 400 and the various components thereof. The data generated by building subsystems 428 can include measured or calculated values that exhibit statistical characteristics and provide information about how the corresponding system or process (e.g., a temperature control process, a flow control process, etc.) is performing in terms of error from its setpoint. These processes can be examined by FDD layer 416 to expose when the system begins to degrade in performance and alert a user to repair the fault before it becomes more severe.

Building Management System 500

Referring now to FIG. 5, a block diagram of another building management system (BMS) 500 is shown, according to some embodiments. BMS 500 can be used to monitor and control the devices of HVAC system 100, waterside system 200, airside system 300, building subsystems 428, as well as other types of BMS devices (e.g., lighting equipment, security equipment, etc.) and/or HVAC equipment. In some embodiments, the building management system includes a fault management system.

BMS 500 provides a system architecture that facilitates automatic equipment discovery and equipment model distribution. Equipment discovery can occur on multiple levels of BMS 500 across multiple different communications busses (e.g., a system bus 554, zone buses 556-560 and 564, sensor/actuator bus 566, etc.) and across multiple different communications protocols. In some embodiments, equipment discovery is accomplished using active node tables, which provide status information for devices connected to each communications bus. For example, each communications bus can be monitored for new devices by monitoring the corresponding active node table for new nodes. When a new device is detected, BMS 500 can begin interacting with the new device (e.g., sending control signals, using data from the device) without user interaction.

Some devices in BMS 500 present themselves to the network using equipment models. An equipment model defines equipment object attributes, view definitions, schedules, trends, and the associated BACnet value objects (e.g., analog value, binary value, multistate value, etc.) that are used for integration with other systems. Some devices in BMS 500 store their own equipment models. Other devices in BMS 500 have equipment models stored externally (e.g., within other devices). For example, a zone coordinator 508 can store the equipment model for a bypass damper 528. In some embodiments, zone coordinator 508 automatically creates the equipment model for bypass damper 528 or other devices on zone bus 558. Other zone coordinators can also create equipment models for devices connected to their zone busses. The equipment model for a device can be created automatically based on the types of data points exposed by the device on the zone bus, device type, and/or other device attributes. Several examples of automatic equipment discovery and equipment model distribution are discussed in greater detail below.

Still referring to FIG. 5, BMS 500 is shown to include a fault management system 502; a system manager 503; several zone coordinators 506, 508, 510 and 518; and several zone controllers 524, 530, 532, 536, 548, and 550. System manager 503 can monitor various data points in BMS 500 and report monitored variables to fault management system 502. System manager 503 can communicate with client devices 504 (e.g., user devices, desktop computers, laptop computers, mobile devices, etc.) via a data communications link 574 (e.g., BACnet IP, Ethernet, wired or wireless communications, etc.). System manager 503 can provide a user interface to client devices 504 via data communications link 574. The user interface may allow users to monitor and/or control BMS 500 via client devices 504.

In some embodiments, system manager 503 is connected with zone coordinators 506-510 and 518 via a system bus 554. System manager 503 can be configured to communicate with zone coordinators 506-510 and 518 via system bus 554 using a master-slave token passing (MSTP) protocol or any other communications protocol. System bus 554 can also connect system manager 503 with other devices such as a constant volume (CV) rooftop unit (RTU) 512, an input/output module (IOM) 514, a thermostat controller 516 (e.g., a TEC5000 series thermostat controller), and a network automation engine (NAE) or third-party controller 520. RTU 512 can be configured to communicate directly with system manager 503 and can be connected directly to system bus 554. Other RTUs can communicate with system manager 503 via an intermediate device. For example, a wired input 562 can connect a third-party RTU 542 to thermostat controller 516, which connects to system bus 554.

System manager 503 can provide a user interface for any device containing an equipment model. Devices such as zone coordinators 506-510 and 518 and thermostat controller 516 can provide their equipment models to system manager 503 via system bus 554. In some embodiments, system manager 503 automatically creates equipment models for connected devices that do not contain an equipment model (e.g., IOM 514, third party controller 520, etc.). For example, system manager 503 can create an equipment model for any device that responds to a device tree request. The equipment models created by system manager 503 can be stored within system manager 503. System manager 503 can then provide a user interface for devices that do not contain their own equipment models using the equipment models created by system manager 503. In some embodiments, system manager 503 stores a view definition for each type of equipment connected via system bus 554 and uses the stored view definition to generate a user interface for the equipment.

Each zone coordinator 506-510 and 518 can be connected with one or more of zone controllers 524, 530-532, 536, and 548-550 via zone buses 556, 558, 560, and 564. Zone coordinators 506-510 and 518 can communicate with zone controllers 524, 530-532, 536, and 548-550 via zone busses 556-560 and 564 using a MSTP protocol or any other communications protocol. Zone busses 556-560 and 564 can also connect zone coordinators 506-510 and 518 with other types of devices such as variable air volume (VAV) RTUs 522 and 540, changeover bypass (COBP) RTUs 526 and 552, bypass dampers 528 and 546, and PEAK controllers 534 and 544.

Zone coordinators 506-510 and 518 can be configured to monitor and command various zoning systems. In some embodiments, each zone coordinator 506-510 and 518 monitors and commands a separate zoning system and is connected to the zoning system via a separate zone bus. For example, zone coordinator 506 can be connected to VAV RTU 522 and zone controller 524 via zone bus 556. Zone coordinator 508 can be connected to COBP RTU 526, bypass damper 528, COBP zone controller 530, and VAV zone controller 532 via zone bus 558. Zone coordinator 510 can be connected to PEAK controller 534 and VAV zone controller 536 via zone bus 560. Zone coordinator 518 can be connected to PEAK controller 544, bypass damper 546, COBP zone controller 548, and VAV zone controller 550 via zone bus 564.

A single model of zone coordinator 506-510 and 518 can be configured to handle multiple different types of zoning systems (e.g., a VAV zoning system, a COBP zoning system, etc.). Each zoning system can include a RTU, one or more zone controllers, and/or a bypass damper. For example, zone coordinators 506 and 510 are shown as Verasys VAV engines (VVEs) connected to VAV RTUs 522 and 540, respectively. Zone coordinator 506 is connected directly to VAV RTU 522 via zone bus 556, whereas zone coordinator 510 is connected to a third-party VAV RTU 540 via a wired input 568 provided to PEAK controller 534. Zone coordinators 508 and 518 are shown as Verasys COBP engines (VCEs) connected to COBP RTUs 526 and 552, respectively. Zone coordinator 508 is connected directly to COBP RTU 526 via zone bus 558, whereas zone coordinator 518 is connected to a third-party COBP RTU 552 via a wired input 570 provided to PEAK controller 544.

Zone controllers 524, 530-532, 536, and 548-550 can communicate with individual BMS devices (e.g., sensors, actuators, etc.) via sensor/actuator (SA) busses. For example, VAV zone controller 536 is shown connected to networked sensors 538 via SA bus 566. Zone controller 536 can communicate with networked sensors 538 using a MSTP protocol or any other communications protocol. Although only one SA bus 566 is shown in FIG. 5, it should be understood that each zone controller 524, 530-532, 536, and 548-550 can be connected to a different SA bus. Each SA bus can connect a zone controller with various sensors (e.g., temperature sensors, humidity sensors, pressure sensors, light sensors, occupancy sensors, etc.), actuators (e.g., damper actuators, valve actuators, etc.) and/or other types of controllable equipment (e.g., chillers, heaters, fans, pumps, etc.).

Each zone controller 524, 530-532, 536, and 548-550 can be configured to monitor and control a different building zone. Zone controllers 524, 530-532, 536, and 548-550 can use the inputs and outputs provided via their SA busses to monitor and control various building zones. For example, a zone controller 536 can use a temperature input received from networked sensors 538 via SA bus 566 (e.g., a measured temperature of a building zone) as feedback in a temperature control algorithm. Zone controllers 524, 530-532, 536, and 548-550 can use various types of control algorithms (e.g., state-based algorithms, extremum seeking control (ESC) algorithms, proportional-integral (PI) control algorithms, proportional-integral-derivative (PID) control algorithms, model predictive control (MPC) algorithms, feedback control algorithms, etc.) to control a variable state or condition (e.g., temperature, humidity, airflow, lighting, etc.) in or around building 10.

## Fault Management System for Connected Equipment

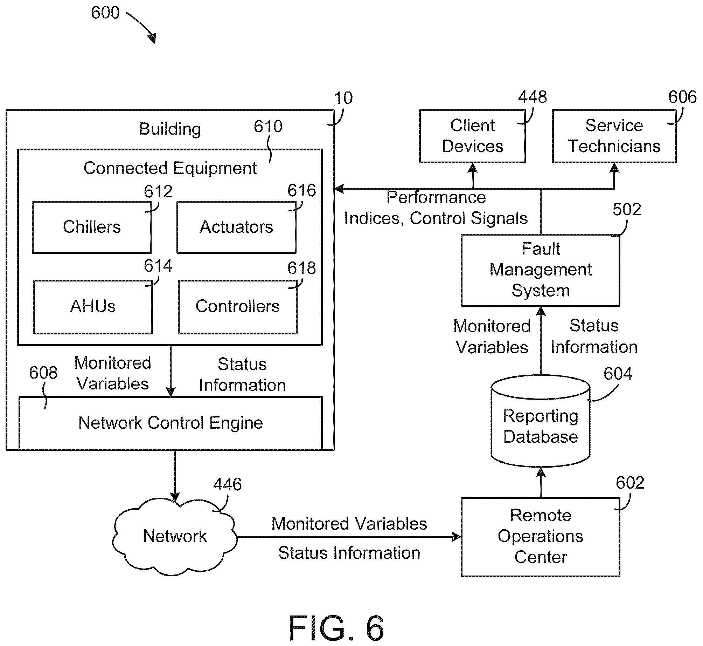

Referring now to FIG. 6, a block diagram of another building management system (BMS) 600 which includes a fault management system for connected equipment is shown, according to some embodiments. BMS 600 can include many of the same components as BMS 400 and BMS 500 as described with reference to FIGS. 4 and 5. For example, BMS 600 is shown to include building 10, network 446, client devices 448, and fault management system 502. Building 10 is shown to include connected equipment 610, which can include any type of equipment used to monitor and/or control building 10. Connected equipment 610 can include connected chillers 612, connected AHUs 614, connected actuators 616, connected controllers 618, or any other type of equipment in a building HVAC system (e.g., boilers, economizers, valves, dampers, cooling towers, fans, pumps, etc.) or building management system (e.g., lighting equipment, security equipment, refrigeration equipment, etc.). Connected equipment 610 can include any of the equipment of HVAC system 100, waterside system 200, airside system 300, BMS 400, and/or BMS 500, as described with reference to FIGS. 1-5.

Connected equipment 610 can be outfitted with sensors to monitor particular conditions of the connected equipment 610. For example, chillers 612 can include sensors configured to monitor chiller variables such as chilled water return temperature, chilled water supply temperature, chilled water flow status (e.g., mass flow rate, volume flow rate, etc.), condensing water return temperature, condensing water supply temperature, motor amperage (e.g., of a compressor, etc.), variable speed drive (VSD) output frequency, and refrigerant properties (e.g., refrigerant pressure, refrigerant temperature, condenser pressure, evaporator pressure, etc.) at various locations in the refrigeration circuit. Similarly, AHUs 614 can be outfitted with sensors to monitor AHU variables such as supply air temperature and humidity, outside air temperature and humidity, return air temperature and humidity, chilled fluid temperature, heated fluid temperature, damper position, etc. In general, connected equipment 610 monitor and report variables that characterize the performance of the connected equipment 610. Each monitored variable can be forwarded to network control engine 608 as a data point (e.g., including a point ID, a point value, etc.).

Monitored variables can include any measured or calculated values indicating the performance of connected equipment 610 and/or the components thereof. For example, monitored variables can include one or more measured or calculated temperatures (e.g., refrigerant temperatures, cold water supply temperatures, hot water supply temperatures, supply air temperatures, zone temperatures, etc.), pressures (e.g., evaporator pressure, condenser pressure, supply air pressure, etc.), flow rates (e.g., cold water flow rates, hot water flow rates, refrigerant flow rates, supply air flow rates, etc.), valve positions, resource consumptions (e.g., power consumption, water consumption, electricity consumption, etc.), control setpoints, model parameters (e.g., regression model coefficients, etc.), and/or any other time-series values that provide information about how the corresponding system, device, and/or process is performing. Monitored variables can be received from connected equipment 610 and/or from various components thereof. For example, monitored variables can be received from one or more controllers (e.g., BMS controllers, subsystem controllers, HVAC controllers, subplant controllers, AHU controllers, device controllers, etc.), BMS devices (e.g., chillers, cooling towers, pumps, heating elements, etc.), and/or collections of BMS devices.

Connected equipment 610 can also report equipment status information. Equipment status information can include, for example, the operational status of the equipment, an operating mode (e.g., low load, medium load, high load, etc.), an indication of whether the equipment is running under normal or abnormal conditions, a fault code, and/or any other information that indicates the current status of connected equipment 610. In some embodiments, equipment status information reported by the connected equipment 610 is in the form of status codes. For example, four types of status codes can be reported by a connected equipment (e.g., chiller), including safety shutdown codes (safety codes), warning codes, cycling codes, and operation codes. Monitored variables and status codes can be referred to as real timeseries data, which may encompass virtual points or calculated metrics.

In some embodiments, each device of connected equipment 610 includes a control panel. The control panel can use the sensor data to shut down the device if the control panel determines that the device is operating under unsafe conditions. For example, the control panel can compare the sensor data (or a value derived from the sensor data) to predetermined thresholds. If the sensor data or calculated value crosses a safety threshold, the control panel can shut down the device and/or operate the device at a derated setpoint. The control panel can generate a data point when a safety shut down or a derate occurs. The data point can include a safety fault code which indicates the reason or condition that triggered the shut down or derate.

Connected equipment 610 can provide monitored variables and equipment status information to a network control engine 608. Network control engine 608 can include a building controller (e.g., BMS controller 366), a system manager (e.g., system manager 503), a network automation engine (e.g., NAE 520), or any other system or device of building 10 configured to communicate with connected equipment 610. In some embodiments, the monitored variables and the equipment status information are provided to network control engine 608 as data points. Each data point can include a point ID and/or a point value. The point ID can identify the type of data point and/or a variable measured by the data point (e.g., condenser pressure, refrigerant temperature, fault code, etc.). Monitored variables can be identified by name or by an alphanumeric code (e.g., Chilled_Water_Temp, 7694, etc.). The point value can include an alphanumeric value indicating the current value of the data point (e.g., 44 °F, fault code 4, etc.).

Network control engine 608 can broadcast the monitored variables and the equipment status information to a remote operations center (ROC) 602. ROC 602 can provide remote monitoring services and can send an alert to building 10 in the event of a critical alarm. ROC 602 can push the monitored variables and equipment status information to a reporting database 604, where the data is stored for reporting and analysis. Fault management system 502 can access database 604 to retrieve the monitored variables and the equipment status information.

In some embodiments, fault management system 502 is a component of BMS controller 366 (e.g., within FDD layer 416). For example, fault management system 502 can be implemented as part of a METASYS® brand building automation system, as sold by Johnson Controls Inc. In other embodiments, fault management system 502 can be a component of a remote computing system or cloud-based computing system configured to receive and process data from one or more building management systems. For example, fault management system 502 can connect the connected equipment 610 (e.g., chillers 612) to the cloud and collect real-time data for over a number of points (e.g., 50 points) on those equipment. In other embodiments, fault management system 502 can be a component of a subsystem level controller (e.g., a HVAC controller, etc.), a subplant controller, a device controller (e.g., AHU controller 330, a chiller controller, etc.), a field controller, a computer workstation, a client device, and/or any other system and/or device that receives and processes monitored variables from connected equipment 610.

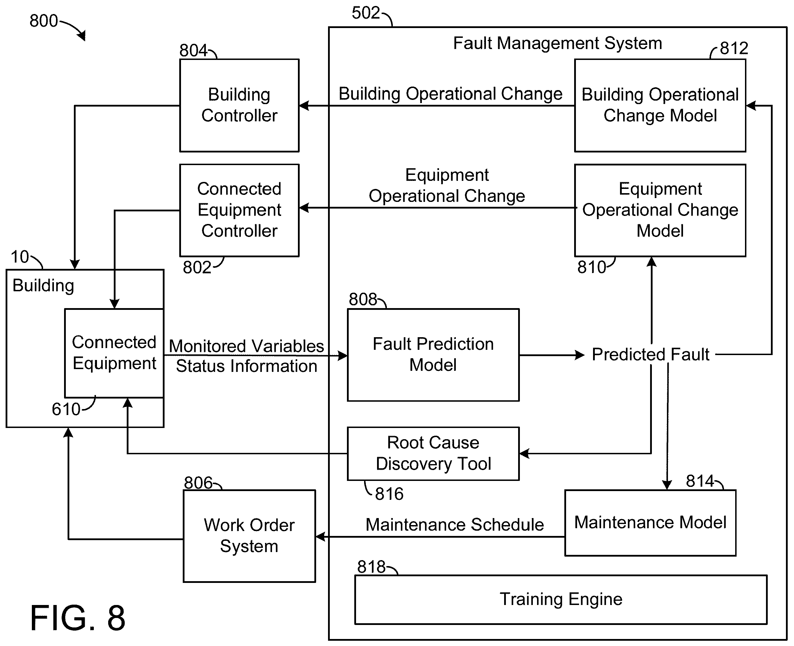

Fault management system 502 may use the monitored variables and status information to predict upcoming faults (e.g., failure modes) of the connected equipment 610 and take action to prevent or mitigate such faults. The fault management system 502 is described in further detail below with reference to FIGS. 8-13. Communications between fault management system 502 and other systems and/or devices can be direct and/or via an intermediate communications network, such as network 446.

In some embodiments, fault management system 502 provides a web interface which can be accessed by service technicians 606, client devices 448, and other systems or devices. The web interface can be used to access the raw data in reporting database 604, view the results produced by the fault management system, identify which equipment is in need of preventative maintenance, and otherwise interact with fault management system 502. Service technicians 606 can access the web interface to view a list of equipment for which faults are predicted by fault management system 502. Service technicians 606 can use the predicted faults to proactively repair connected equipment 610 before a fault and/or an unexpected shut down occurs. These and other features of fault management system 502 are described in greater detail below.

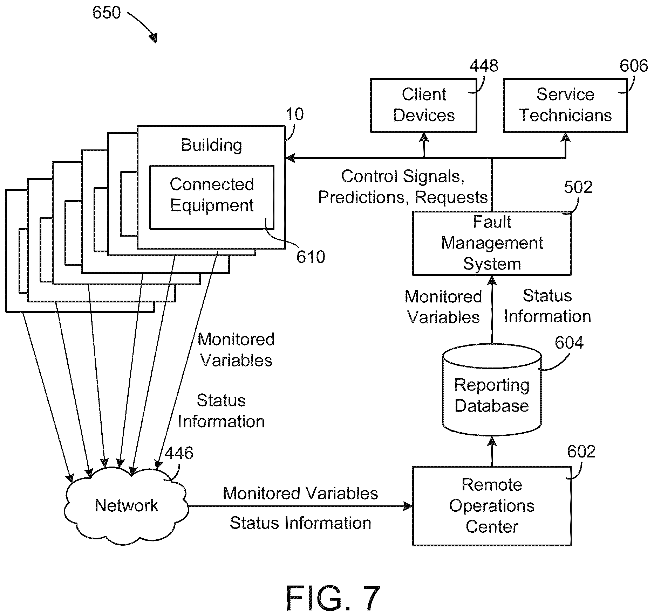

Referring now to FIG. 7, a block diagram of another building management system (BMS) 650 is shown, according to some embodiments. The building management system 650 of FIG. 7 includes the components of the building management system 600 of FIG. 6, plus any number of additional buildings 10 with additional groups of connected equipment 610. The multiple buildings 10 and multiple units of connected 610 can be considered as a fleet of buildings and/or equipment. The buildings 10 and connected equipment 610 can be located in one location (e.g., one campus) or multiple locations, including across geographic regions, states, provinces, territories, countries, continents, etc. FIG. 7 illustrates that the network 446 can connect all such buildings 10 and connected equipment 610 to the remote operations center 602 (e.g., via the Internet). The fault management system 502 can then be provided as a cloud-based service, for example. In other embodiments, the fault management system 502 is implemented at the edge, for example locally on unit of connected equipment 610.

Referring now to FIG. 8, a block diagram of a system 800 including a detailed view of the fault management system 502 is shown, according to some embodiments. The system 800 includes the fault management system 502, the connected equipment 610 serving the building 10, a connected equipment controller 802 for the connected equipment 610, a building controller 804 for other controllable devices of the building 10, and a work order system 806. The fault management system 502 is shown as including a fault prediction model 808, an equipment operational change model 810, a building operational change model 812, a maintenance model 814, root cause discovery tool 816, and training engine 818. The fault management system 502 can be implemented as one or more processors and one or more non-transitory computer readable media storing program instructions that, when executed by one or more processors, cause the processors to perform the operations attributed herein to the fault management system 502 and components thereof. The fault management system 502 can be implemented as a cloud-based computing resource, at the edge (e.g., embedded in the connected equipment), locally at data infrastructure of the building 10, or various combinations thereof in various embodiments.

The fault prediction model 808 is shown as receiving data from and/or relating to the connected equipment 610. The data can include timeseries values for monitored variables. The data can also include status information such as status codes indicating normal operation, on/off status, fault conditions, etc.. The fault prediction model 808 can stream such data continuously from the connected equipment 610 or receive batches of such data, for example.

The fault prediction model 808 is configured to predict a future fault based on the timeseries data relating to the connected equipment 610. The fault prediction model 808 can include a neural network or other artificial intelligence model trained to predict future faults. The fault prediction model 808 can work as a classifier to classify sets of timeseries data relating to the connected equipment 610 as corresponding to conditions that indicate different types of faults that will occur, in various scenarios. The fault prediction model 808 thereby outputs a predicted fault. The predicted fault output by the fault prediction model 808 can include a type of the fault, a predicted timing of the fault, a confidence in the fault prediction and/or other information relating to a future fault condition predicted to occur by the fault prediction model 808.

In some embodiments, the predicted fault from the fault prediction model 808 is communicated to the equipment operational change model 810. The equipment operational change model 810 is configured to determine an operational change for the equipment intended to and/or expected to prevent or mitigate the predicted fault. For example, changing an internal operating settings of the connected equipment 610 may help to mitigate the predicted fault (e.g., reduce consequences of the fault, reach a less severe fault condition, delay the fault condition, etc.) or prevent the predicted fault (e.g., enable continuation of normal operation).

The equipment operational change model 810 receive the monitored variables and/or status information from the connected equipment 610 and use such information in combination with the predicted fault to determine the operational change. The equipment operational change model 810 may be a neural network or other artificial intelligence model trained using an actual and/or synthetic set of timeseries data showing results of different operational changes with respect to preventing or mitigating fault conditions (e.g., trained by training engine 818). As another example, the equipment operational change model 810 can include a rules-based approach whereby predefined rules are executed to determine the operational change based on the predicted fault. As one such example, the predefined rules may indicate that a certain setpoint should be adjusted in one direction by a certain amount in response to prediction of a particular type of fault. Various such examples are possible and enable the equipment operational change model 810 to output an equipment operational change to the connected equipment controller 802 as shown in FIG. 8. In response to the equipment operational change from the fault management system 502, the connected equipment controller 802 operates the connected equipment 610 to automatically implement the equipment operational change as an automated action. The fault management system 502 thereby alters operation of the connected equipment 610 to prevent or mitigate the predicted fault.

In some embodiments, the predicted fault from the fault prediction model 808 is communicated to the building operational change model 810. The building operational change model 812 is configured to determine a building operational change intended to and/or expected to prevent or mitigate the predicted fault. The building operational changes are changes to be implemented using one or more building devices other than the connected equipment 610 of relevance in the predicted fault. For example, a building operational change can include changing a load on the connected equipment 610 (e.g., increasing or decreasing demand for a resource generated by the connected equipment 619 by changing other building setpoints), time-shifting operations of the connected equipment 610, changing environmental conditions around the connected equipment 610, changing characteristics of an input resource to the connected equipment 610, etc.

The building operational change model 812 may receive various building data, including in some examples the monitored variables and status information from the connected equipment 610, and use such information in combination with the predicted fault to determine a building operational change to prevent or mitigate the predicted fault. The building operational change model 812 may be a neural network or other artificial intelligence model trained using an actual and/or synthetic set of timeseries data showing results of different operational changes with respect to preventing or mitigating fault conditions (e.g., trained by training engine 818). As another example, the building operational change model 812 can include a rules-based approach whereby predefined rules are executed to determine the operational change based on the predicted fault. As one such example, the predefined rules may indicate that a certain building setpoint should be adjusted in one direction by a certain amount in response to prediction of a particular type of fault. Various such examples are possible and enable the building operational change model 812 to output an equipment operational change to the building controller 808 as shown in FIG. 8. In response to the building operational change from the fault management system 502, the building controller 802 operates the building 10 (e.g., one or more building devices in building 10) to automatically implement the building operational change as an automated action. The fault management system 502 thereby alters operation of the building 10 to prevent or mitigate the predicted fault of the connected equipment 610.

In some embodiments, the predicted fault from the fault prediction model 808 is provided to the maintenance model 814. The maintenance model 814 is configured to determine a maintenance schedule intended to and/or expected to prevent or mitigate the predicted fault, for example in an optimal manner. The maintenance schedule can define one or more maintenance actions to be taken at one or more future times, for example by one or more service technicians. The maintenance actions can include maintenance on the connected equipment 610 and/or on other elements of the building 10.

The maintenance model may receive various other data inputs, including monitored variables and status information from the connected equipment, service technician schedules, parts availability and lead time information, and/or maintenance budget information, etc. and use such information in combination with the predicted fault from the fault prediction model 808 to determine a maintenance schedule for the building 10.

The maintenance model 814 may be a neural network or other artificial intelligence model trained using an actual and/or synthetic set of timeseries data showing results of different maintenance actions with respect to preventing or mitigating fault conditions (e.g., trained by training engine 818). As another example, the maintenance model 814 can include a rules-based approach whereby predefined rules are executed to determine the operational change based on the predicted fault. As one such example, the predefined rules may indicate that a certain maintenance action should be performed before predicted occurrence of a particular type of fault to prevent the fault. Various such examples are possible and enable the maintenance model 814 output a maintenance schedule to the work order system 806 as shown in FIG. 8. In response to the maintenance schedule from the fault management system 502, the work order system 806 causes the scheduled maintenance to be performed, for example by automatically generating a work order for the scheduled maintenance and transmitting such orders to technicians, automatically ordering required tools or parts for performing the scheduled maintenance, etc. The fault management system 502 thereby causes performance of maintenance actions to prevent or mitigate the predicted fault.

FIG. 8 shows the fault management system 502 as also including a root cause discovery tool 816. The root cause discovery tool 816 is shown as receiving the predicted fault from the fault prediction model 808 and as being in communication with the connected equipment 610. The root cause discovery tool 816 may perform various operations to diagnose the root cause of a predicted fault, occurring fault, or previous fault. In some examples, the root cause discovery tool 816 is configured to perform experiments by altering operation of the connected equipment 610 and/or other elements of the building 10 to generate information that can help indicate the root cause of a fault. The root cause discovery tool 816 may also be configured to determine whether an equipment operational change, a maintenance action, or a building operational change is most suitable to (e.g., most likely, most reliable, most efficient, etc.) preventing or mitigating a predicted fault, and coordinate operation of the various elements of the fault management system 502 accordingly (e.g., to cause implementation of the most suitable solution while causing omission of operation of other components). In various embodiments, one or more of the root cause discovery tool 816, maintenance model 814, building operational change model 812, and equipment operational change model 810 are omitted.

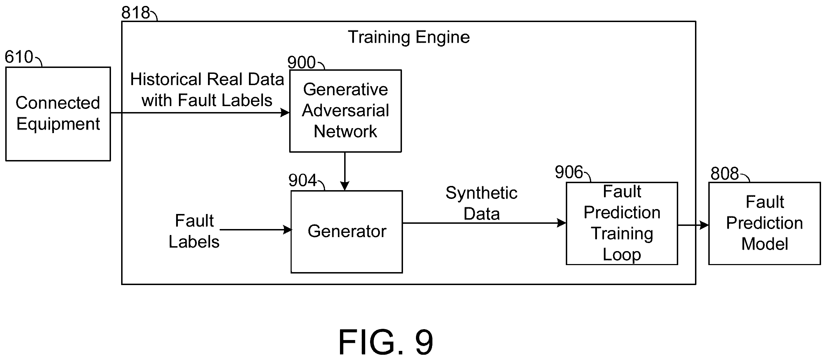

The fault management system 502 is also shown as including training engine 818. The training engine 818 can be adapted to train, tune, generate, update, adjust, etc. the fault prediction model 808, the equipment operational change model 810, the building operational change model 812, and/or the maintenance model 814 in various embodiments. The training engine 818 can implement supervised or unsupervised training approaches in various embodiments, for example using a generative adversarial network (GAN), including a conditional embedder generative adversarial network (CEGAN) as described below. The training engine 818 can access various data from and relating to the connected equipment 610 and the building 10 and use such data for development and adjustment of various elements of the fault management system 502 in various embodiments. An example of the training engine 818 adapted to train the fault prediction model 808 is shown in FIG. 9 and described in detail with reference thereto below.

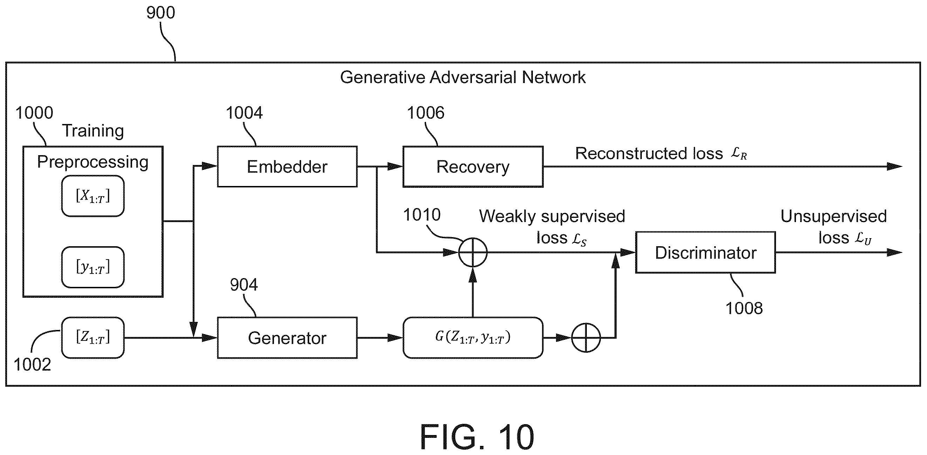

Referring now to FIG. 9, a block diagram showing the training engine 818 is shown, according to some embodiments. In the example of FIG. 9, the training engine 818 outputs the fault prediction model 808 of the fault management system 502. The training engine 818 is shown as including (e.g., involving, using, etc.) a generative adversarial network 900, a generator 904 (which is an element of the generative adversarial network 900 for example as illustrated in FIG. 10), and a fault prediction training loop 906. The training engine 818 is shown as communicable with the connected equipment 610 (e.g., via network 446 or other elements of FIGS. 6-7) to receive historical data relating to the connected equipment 610. The training engine 818 is configured to operate the generative adversarial network 900 to train the generator 904 and then use the generator 904 to generate synthetic data which is used by fault prediction training loop 906 to train the fault prediction model 808.

The generative adversarial network 900 receives, as an input from the connected equipment 610 (e.g., via a network, database, etc.) historical data relating to the connected equipment 610 (e.g., data of various monitored variables and status information) including fault labels. The fault labels indicate moments in the historical data corresponding to equipment faults, including the type of fault which occurred at such moments. The fault labels can be generated by some type of automated preprocessing, based on status information from the connected equipment 610, or from some other source. The historical data preferably includes one or more instances of all possible fault types. However, in the examples contemplated here, the historical data does not include sufficient data to directly train the fault prediction model 808 so that the fault prediction model 808 makes accurate and reliable predictions. Accordingly, the training engine uses the generative adversarial network 900 and the generator 904 thereof to generate synthetic data of a sufficient amount to enable training of the fault prediction model 808 to a higher degree of accuracy and reliability than could be achieved using solely the historical data.

The generative adversarial network 900 provides an unsupervised learning process in which a zero-sum, adversarial game is played between elements of the generative adversarial network 900. Independent of human intervention, the generator 904 tries to generate synthetic data which cannot be distinguished from real data, while a discriminator element of the generative adversarial network 900 tries to determine whether data sets provided thereto are synthetic data or real data. These elements compete and repeated update to improve at their respective tasks, until the generator 904 can produce synthetic data which is very difficult to distinguish from real data. An example of the generative adversarial network 900 is shown in FIG. 10 and described in detail with reference thereto.

The generative adversarial network 900 is a conditional generative adversarial network or a conditional embedder generative adversarial network. In such embodiments, the generative adversarial network 900 is configured to use the fault labels in order to guide the generator 904 to generate synthetic data corresponding to the type of fault indicated by the fault label provided as an input to the generator 904. Accordingly, as shown in FIG. 9, the generator 904 is configured to receive fault labels as an input and to generate synthetic data corresponding to the faults indicated by the fault labels. The generator 904 is thus able to generate rich, robust synthetic data with examples of the faults which the fault prediction model 808 is intended to predict. Such an approach of using fault labels as an input to a generator 904 (e.g., conditional generator) of a generative adversarial network 900 (e.g., conditional generative adversarial network) enables the generator 904 to generate a synthetic dataset suited particularly for training of the fault prediction model 808.

In the example of FIG. 9, the historical data from the connected equipment 610 and the synthetic data generated by the generator 904 is timeseries data. The timeseries data represents a set of data points (e.g., monitored variables) at a series of steps in time (e.g., every second, every minute, every 15 minutes, etc.). The generative adversarial network 900 may be specially adapted for handling of timeseries data. By producing synthetic timeseries data, the generator 904 can enable the fault prediction training loop 906 to learn from trends in the synthetic data in order to train the fault prediction model 808 to predict (forecast, etc.) future faults. Configuration of the generative adversarial network 900 to predict timeseries data is thus particularly well suited to facilitating training of the fault prediction model 808.

The fault prediction training loop 906 is configured to use the synthetic data (and, in some embodiments, the associated synthetic data) to train the fault prediction model 808 to predict faults, for example without (independent of) human intervention or involvement. The fault prediction training loop 906 can use various deep learning approaches to training the fault prediction model 808. The fault prediction training loop 906 can include predicting a fault by the fault prediction model 808, comparing the predicted fault to a fault label (or other indication of a fault) in the synthetic data, automatically improving the fault prediction model 808 in response to some discrepancy, and repeatedly executing that process until the fault prediction model 808 can accurately and reliably predict the faults in the synthetic data.

The training engine 818 thereby uses a generative adversarial network 900, including a generator 904 which can use fault labels as an input, to generate synthetic data used in a fault prediction training loop 906 to output a fault prediction model 808. The fault prediction model 808 can then be used for online fault prediction, prevention, and/or mitigation as shown in FIG. 8.

Referring now to FIG. 10, a block diagram of the generative adversarial network 900 is shown, according to some embodiments. As shown in FIG. 10, the generative adversarial network 900 includes generator 904, preprocessing block 1000, randomizer 1002, embedder 1004, recovery 1006, and discriminator 1008. The preprocessing block 1000 is shown as providing inputs to the embedder 1004 and the generator 904, with the generator 904 providing an output to the discriminator 1008, which also receives an output of the embedder 1004. The output of the embedder 1004 may be combined with the output of the discriminator 1008 before provision to the discriminator 1008 as shown in FIG. 10. The embedder 1004 is also shown as providing its output to the recovery 1006. The generative adversarial network 900 is configured as a conditional embedder generative adversarial network 900 particularly suited for generating synthetic timeseries data rich in information related to various fault conditions.

The preprocessing block 1000 is configured to arrange historical data from and/or relating to the connected equipment 610 into a set of feature data $[X_{1:T}]$ (e.g., representing values of monitored variables) and labels $[y_{1:T}]$ (e.g., fault labels). The preprocessing block 1000 can perform operations include various preprocessing steps for preparing raw data for use by the generative adversarial network 900 (e.g., imbalanced data augmentation). The randomizer 1002 is configured to generate random noise $[Z_{1:T}]$. Various randomization functions can be used to generate the random noise $[Z_{1:T}]$, for example by drawin randomly from a Gaussian distribution. The feature data $[X_{1:T}]$, labels $[y_{1:T}]$, and random noise $[Z_{1:T}]$ are timeseries data (e.g., have values for time steps from 1 to T.

The feature data $[X_{1:T}]$, labels $[y_{1:T}]$, and random noise $[Z_{1:T}]$ are provided from the preprocessing block 1000 and randomizer 1002 to the generator 904. The generator uses the feature data $[X_{1:T}]$, labels $[y_{1:T}]$, and random noise $[Z_{1:T}]$ to generate synthetic data $G(Z_{1:T}, y_{1:T})$. The generator 904 is a machine-learning model, for example a neural network such as a convolutional neural network. The generator 904 may treat the random noise $[Z_{1:T}]$ as a vector in a latent space and apply meaning to points in the latent space indicated by the random noise $[Z_{1:T}]$ such that the random noise $[Z_{1:T}]$ is used by the generator 904 to generate synthetic data $G(Z_{1:T}, y_{1:T})$. Additionally, the generator 904 may be conditional on the labels $[y_{1:T}]$, for example such that the generator 904 processes the random noise $[Z_{1:T}]$ different depending on the associated labels $[y_{1:T}]$, thereby arriving at different synthetic data $G(Z_{1:T}, y_{1:T})$. As such, the synthetic data can be expressed as a function of $[Z_{1:T}]$ and $[y_{1:T}]$, i.e., $G(Z_{1:T}, y_{1:T})$.

The embedder 1004 enables the generative adversarial network 900 to capture the temporal dynamics form the latent space instead of the feature space. The embedder 1004 receives the feature data $[X_{1:T}]$ and labels $[y_{1:T}]$ from the preprocessing block 1000. The embedder 1004 can generate a low-dimensional vector representation that captures relationships in the higher dimensional input data, e.g., in the feature data $[X_{1:T}]$. The embedder 1004 thereby captures temporal dynamics from real data (e.g., from feature data $[X_{1:T}]$ and/or labels $[y_{1:T}]$) and helps alleviate computational overhead by learning from the latent space instead of the feature space. The embedder 1004 provides an output (e.g., an embedding) to the recovery 1006 and to a node 1010 which also receives the synthetic data $G(Z_{1:T}, y_{1:T})$ from the generator 904.

The recovery 1006 is configured take the output of the embedder 1004 as an input and output a reconstructed loss $L_R$. For example, the recovery 1006 may be configured to attempt to reconstruct the feature data feature data $[X_{1:T}]$ and/or labels $[y_{1:T}]$ from an embedding output from the generator 904, and the reconstructed loss $L_R$ may be representative of the performance of the embedder 1004 in creating the embedding. In some embodiments, the generative adversarial network 900 updates the embedder 1004 to reduce the reconstructed loss $L_R$ determined by the generative adversarial network 900.

The node 1010 receives the output of the embedder 1004 and the synthetic data $G(Z_{1:T}, y_{1:T})$ from the generator 904, and uses such information to provide a weakly supervised loss $L_s$ to the discriminator 1008. The discriminator 1008 also receives the synthetic data $G(Z_{1:T}, y_{1:T})$ from the generator 904. The discriminator 1008 uses the synthetic data $G(Z_{1:T}, y_{1:T})$ and the weakly supervised loss $L_s$ to attempt to discriminate between synthetic data and real data, i.e., to determine whether the synthetic data $G(Z_{1:T}, y_{1:T})$ provided to the discriminator 1008 is synthetic data or real (actual, historical, etc.) data. The discriminator 1008 may be a neural network, for example a convolutional neural network configured as a classifier for classifying inputs thereto as real data or synthetic data. Based at least on whether the discriminator 1008 is correct in its discriminations, an unsupervised loss $L_U$ results from operation of the generative adversarial network 900.

The reconstructed loss $L_R$, the weakly supervised loss $L_s$, and/or the unsupervised loss $L_U$ can be used by the generative adversarial network 900 to iteratively make updates to the generator 904, the embedder 1004, the recovery 1006 and/or the discriminator 1008, for example to reduce (minimize, optimize, etc.) the values of the reconstructed loss $L_R$, the weakly supervised loss $L_s$, and/or the unsupervised loss $L_U$. The generative adversarial network 900 can thereby perform an iterative process, independent of human intervention, to improve the elements thereof over time. Advantageously, such an adversarial learning approach results in a generator 904 which is well-trained to generate synthetic time series data with characteristics which match those of the real, historical data (e.g., of feature data $[X_{1:T}]$ and labels $[y_{1:T}]$). The generator 904 can then be used as shown in FIG. 9 for generation of synthetic data used for training of a fault prediction model 808.

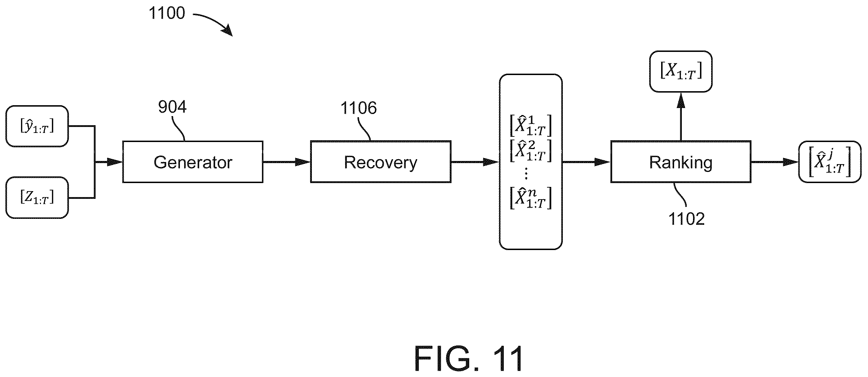

Referring now to FIG. 11, an inference architecture 1100 is shown which can be used by the training engine 818 to generate the synthetic data for use by the fault prediction training loop 906, according to some embodiments. The inference architecture 1100 includes the generator 904, the recovery 1106, and a ranking block 1102. The generator 904 receives fault labels, in particular ideal fault labels $[\hat{y}_{1:T}]$, and random noise $[Z_{1:T}]$. The ideal fault labels $[\hat{y}_{1:T}]$ correspond to faults which are desired to be represented in the synthetic training data used for training the fault detection model 808. As illustrated in FIG. 11, the generator 904 uses the ideal fault labels $[\hat{y}_{1:T}]$ and random noise $[Z_{1:T}]$ as inputs and provides the output of the generator 904 (e.g., $G(Z_{1:T}, \hat{y}_{1:T})$ to the recovery 1106. The recovery 1106 uses the output of the generator 904 to define multiple possible sets of synthetic data, shown in FIG. 11 as $[\hat{X}^1_{1:T}], [\hat{X}^2_{1:T}], \ldots [\hat{X}^n_{1:T}]$ (i.e., $n$ sets of synthetic data). Such multiple sets of the synthetic data can be generated by operating the generator 904 $n$ times, for example based on n different random noise inputs $[Z_{1:T}]$.

As shown in FIG. 11, the sets of synthetic data $[\hat{X}^1_{1:T}], [\hat{X}^2_{1:T}], \ldots [\hat{X}^n_{1:T}]$ are provided to the ranking block 1102. The ranking block 1102 also receives a set of original feature data $[X_{1:T}]$. The ranking block 1102 is configured to compare the sets of synthetic data $[\hat{X}^1_{1:T}], [\hat{X}^2_{1:T}], \ldots [\hat{X}^n_{1:T}]$ to the original feature data $[X_{1:T}]$ and rank the sets of synthetic data based on how well each set simulates, compares to, looks like, etc. the original feature data $[X_{1:T}]$ and/or otherwise is of high quality. Various tests, comparisons, assessments, etc. may be performed by the ranking block 1102. The ranking block 1102 can thereby select the best (highest ranked) set of synthetic data, shown as $[\hat{X}^j_{1:T}]$ in FIG. 11, as the synthetic data to be provided to the fault prediction training loop 906 as in FIG. 9. The inference architecture 1100 thereby enables production and selection of high quality synthetic data for use in training a fault prediction model.

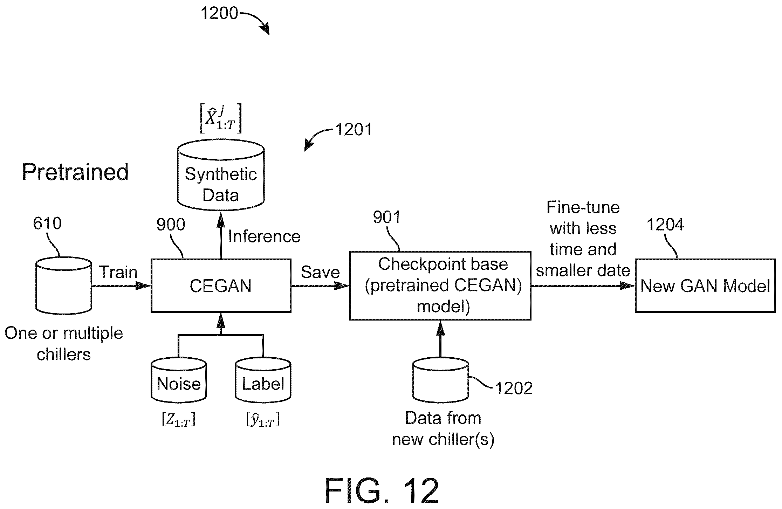

Referring now to FIG. 12, a training architecture 1200 is shown, according to some embodiments. The training architecture 1200 can be implemented by the training engine 818 of FIG. 8, for example. The training architecture 1200 provides for pre-training of an additional generative adversarial network 1204 for new or additional connected equipment 1202, for example via reuse of the generative adversarial network 900 discussed above.

FIG. 12 shows that the training architecture 1200 includes a first portion 1201 including the conditional adversarial network 900 receiving data from connected equipment 610 for training and receiving noise $[Z_{1:T}]$ and ideal labels $[\hat{y}_{1:T}]$ for generation of synthetic data $\left[\hat{X}_{1:T}^{j}\right]$, as described in detail above. The first portion 1201 can operate as described above for use with respect to one or more units of connected equipment.

FIG. 12 illustrates an example where one or more additional connected equipment (shown as connected equipment 1202) are added, for example added to the system 600, system 650, or system 800 as shown in FIGS. 6-8, respectively. FIG. 12 may be applicable when a new unit of connected equipment is installed and brought online, when a new building site is added to a portfolio, when a new facility subscribes to a fault prediction service, etc. In such an example, FIG. 12 illustrates that the generative adversarial network 900 can be duplicated from the first portion 1201 for reuse with respect the additional connected equipment 1202, which is illustrated in FIG. 12 by duplicate generative adversarial model 901 depicted as being saved (copied, duplicated, etc.) from first portion 1201 of the training architecture 1200. The duplicate generative adversarial model 901 is then fed data from the additional connected equipment 1202 and retrained to generate the new generative adversarial model 1204. Because the duplicate generative adversarial model 901 is already trained for a similar dataset (e.g., corresponding to the same type of equipment, same model, etc.), fine-tuning to arrive at the new generative adversarial model 1204 can be conducted with significantly fewer computations, in less time, and with less data from the additional connected equipment 1202 than if a new generative adversarial model 1204 were trained from a generic starting point.

The new generative adversarial model 1204 is thereby efficiently trained on a relatively small data set via the training architecture 1200. The new generative adversarial model 1204 can then be used to generate synthetic data corresponding to the new connected equipment 1202 for use in training a fault prediction model for the new connected equipment 1202 that can be used as in FIG. 8, in various embodiments. As one advantage, the training architecture can enable start-up of fault prediction, prevention, and mitigation services (e.g., operation of system 800 of FIG. 8) much sooner after installation of a new unit of connected equipment as compared to other approaches.

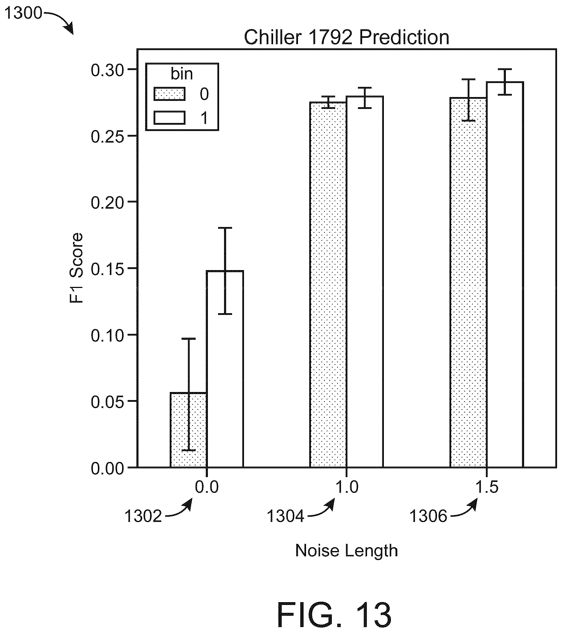

Referring now to FIG. 13, experimental results illustrating the results of using the features of FIGS. 9-13 is shown, according to an example experiment. FIG. 13 shows a graph 1300 of an F1 score, in particular a harmonic mean of precision and recall, of fault prediction for different scenarios. Higher values represent better performance of the fault prediction model 808. In a first group 1302, graphed bars represent performance of the fault prediction model 808 in a scenario where the fault prediction model 808 is trained directly on real data (i.e., omission of the generative adversarial network 900. In a second group 1304, graphed bars represent performance of the fault prediction model 808 in a scenario where the fault prediction model 808 is trained on synthetic data from the generative adversarial network 900, and in particular on the same amount of data as for the first group 1302. As shown, using synthetic data from the generative adversarial network 900 provides significant performance improvements, even without increase the volume of data used for training the fault prediction model 808, for example by improving the richness of the data (e.g., such that more faults are represented as a result of providing the ideal fault labels to the generator 904 as described with reference to FIG. 11).

In a third group 1306, graphed bars represent performance of the fault prediction model 808 in a scenario where the fault prediction model 808 is trained on synthetic data from the generative adversarial network 900, and in particular on 50% more data as for the first group 1302. As shown, increasing the amount of synthetic data available for training (e.g., by continuing to run the inference architecture 1100) improves performance of the resulting fault prediction model 8080. The various features described above thereby improve performance of automated fault prediction, prevention, and mitigation technologies.

## Configuration of Exemplary Embodiments

The present disclosure contemplates methods, systems and program products on any machine-readable media for accomplishing various operations. The embodiments of the present disclosure can be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. Combinations of the above are also included within the scope of machine-readable media. Machine-executable instructions include, for example, instructions and data which cause a general purpose computer, special purpose computer, or special purpose processing machines to perform a certain function or group of functions.

**Claims**

1. A method for predicting faults in building equipment and initiating responsive actions, the method comprising:

    - training a conditional generator (904) by operating a generative adversarial network (900) comprising the conditional generator;
    - generating, by the conditional generator, synthetic timeseries data corresponding to a plurality of fault types, wherein labels for the plurality of fault types are used as inputs to the conditional generator and correspond to the plurality of fault types which are desired to be represented in the synthetic timeseries data, wherein the conditional generator uses the labels to generate the synthetic timeseries data corresponding to the plurality of fault types indicated by the labels;
    - training a fault prediction model (808) using the synthetic timeseries data;
    - predicting a fault for building equipment by applying the fault prediction model to real timeseries data relating to the building equipment; and
    - initiating an automated action in response to predicting the fault for the building equipment.

2. The method of Claim 1,
wherein operating the generative adversarial network further comprises creating, by an embedder, a representation of preprocessed training data having reduced dimensionality relative to the preprocessed training data, attempting, by a recovery, to reconstruct the preprocessed training data from the representation, and attempting, by a discriminator, to discriminate to determine whether the synthetic timeseries data is synthetic.

3. The method of Claim 2, comprising:

    - receiving, by the embedder and the generator, the preprocessed training data;
    - providing, by the generator, generated data to the discriminator;
    - providing, by the embedder, a first output to the discriminator; and
    - providing, by the embedder, a second output to the recovery.

4. The method of any of Claims 2-3,
comprising enabling, by the embedder, learning of temporal dynamics from a latent space.

5. The method of any of Claims 1-4,
comprising using, by the generative adversarial network, a reconstructed loss, a weakly supervised loss, and an unsupervised loss.

6. The method of any of Claims 1-5,
wherein training the conditional generator is based on first actual timeseries data for a first unit of building equipment, the method further comprising updating the conditional generator for a second unit of building equipment by operating the generative adversarial network based on actual timeseries data for the second unit of building equipment.

7. The method of any of Claims 1-6,
wherein training the fault prediction model using the synthetic timeseries data comprises ranking a plurality of sets of the synthetic timeseries data and selecting a highest ranked of the plurality of sets of the synthetic timeseries data for use in training the fault prediction model.

8. The method of Claim 7,
wherein ranking the plurality of sets of the synthetic timeseries data comprises comparing the plurality of sets of the synthetic timeseries data to historical training data.

9. The method of any of Claims 1-8,

    wherein the automated action comprises altering an internal operation of the building equipment to correct, mitigate, or prevent the fault, and/or
    altering a load on the building equipment to mitigate or prevent the fault, and/or
    performing maintenance on the building equipment to mitigate or prevent the fault.

10. One or more non-transitory computer-readable media storing program instructions that, when executed by one or more processors, cause the one or more processors to execute operations comprising:

    - training a conditional generator (904) by operating a generative adversarial network (900) comprising the conditional generator;
    - generating, by the conditional generator, synthetic timeseries data corresponding to a plurality of fault types, wherein labels for the plurality of fault types are used as inputs to the conditional generator and correspond to the plurality of fault types which are desired to be represented in the synthetic timeseries data, wherein the conditional generator uses the labels to generate the synthetic timeseries data corresponding to the plurality of fault types indicated by the labels;
- training a fault prediction model (808) using the synthetic timeseries data; and
- predicting a fault for building equipment by applying the fault prediction model to real timeseries data relating to the building equipment, and
- initiating an automated action in response to predicting the fault for the building equipment.

11. The one or more non-transitory computer-readable media of Claim 10,
   wherein the operations further comprise creating, by an embedder, a representation of preprocessed training data having reduced dimensionality relative to the preprocessed training data, attempting, by a recovery, to reconstruct the preprocessed training data from the representation, and attempting, by a discriminator, to discriminate to determine whether the synthetic timeseries data is synthetic.

12. The one or more non-transitory computer-readable media of Claim 11, the operations further comprising:

   - receiving, by the embedder and the generator, the preprocessed training data;
   - providing, by the generator, generated data to the discriminator;
   - providing, by the embedder, a first output to the discriminator; and
   - providing, by the embedder, a second output to the recovery.

13. The one or more non-transitory computer-readable media of any of Claims 10-12,
   wherein the operations further comprise updating the conditional generator for a new unit of building equipment by operating the generative adversarial network based on actual timeseries data for the new unit of building equipment.

14. The one or more non-transitory computer-readable media of any of Claims 10-13,

   wherein training the fault prediction model using the synthetic timeseries data comprises ranking a plurality of sets of the synthetic timeseries data and selecting a highest ranked of the plurality of sets of the synthetic timeseries data for use in training the fault prediction model;
   wherein ranking the plurality of sets of the synthetic timeseries data preferably comprises comparing the plurality of sets of the synthetic timeseries data to historical training data.

15. The one or more non-transitory computer-readable media of any of Claims 10-14,
   wherein the operations further comprise mitigating or preventing the fault by altering an internal operation of the building equipment, altering a load on the building equipment, or causing maintenance to be performed on the building equipment.

**Patentansprüche**

1. Verfahren zum Vorhersagen von Fehlern in Gebäudenausrüstung und zum Einleiten von Gegenmaßnahmen, das Verfahren umfassend:

   - Trainieren eines bedingten Generators (904) durch Betreiben eines generativen adversarischen Netzwerks (900), das den bedingten Generator umfasst;
   - Erzeugen synthetischer Zeitreihendaten, die einer Vielzahl von Fehlertypen entsprechen, durch den bedingten Generator, wobei Kennzeichnungen für die Vielzahl von Fehlertypen als Eingaben für den bedingten Generator verwendet werden und der Vielzahl von Fehlertypen entsprechen, die in den synthetischen Zeitreihendaten dargestellt werden sollen, wobei der bedingte Generator die Kennzeichnungen verwendet, um die synthetischen Zeitreihendaten zu erzeugen, die der Vielzahl von Fehlertypen entsprechen, die durch die Kennzeichnungen angegeben sind;
   - Trainieren eines Fehlervorhersagemodells (808) unter Verwendung der synthetischen Zeitreihendaten;
   - Vorhersagen eines Fehlers für Gebäudeausrüstung durch Anwenden des Fehlervorhersagemodells auf reale Zeitreihendaten, die sich auf die Gebäudeausrüstung beziehen; und
   - Einleiten einer automatischen Aktion als Reaktion auf das Vorhersagen des Fehlers für die Gebäudeausrüstung.

2. Verfahren nach Anspruch 1,
   wobei das Betreiben des generativen adversen Netzwerks ferner das Erzeugen einer Repräsentation von vorverarbeiteten Trainingsdaten mit reduzierter Dimensionalität relativ zu den vorverarbeiteten Trainingsdaten durch einen Embedder umfasst, das Versuchen, die vorverarbeiteten Trainingsdaten aus der Repräsentation zu rekonstruieren, und das Versuchen, durch einen Diskriminator zu diskriminieren, um zu bestimmen, ob die synthetischen Zeitreihendaten synthetisch sind.

3. Verfahren nach Anspruch 2, umfassend:

   - Empfangen der vorverarbeiteten Trainingsdaten durch den Embedder und den Generator;

- Bereitstellen der erzeugten Daten durch den Generator an den Diskriminator;

- Bereitstellen einer ersten Ausgabe an den Diskriminator durch den Embedder; und

- Bereitstellen einer zweiten Ausgabe für die Wiederherstellung durch den Embedder.

4. Verfahren nach einem der Ansprüche 2 bis 3, umfassend das Ermöglichen des Lernens der zeitlichen Dynamik aus einem latenten Raum durch den Embedder.

5. Verfahren nach einem der Ansprüche 1 bis 4, umfassend das Verwenden eines rekonstruierten Verlusts, eines schwach überwachten Verlusts und eines nicht überwachten Verlusts durch das generative adversarische Netzwerk.

6. Verfahren nach einem der Ansprüche 1 bis 5, wobei das Trainieren des bedingten Generators auf ersten tatsächlichen Zeitreihendaten für eine erste Einheit der Gebäudeausrüstung basiert, wobei das Verfahren ferner das Aktualisieren des bedingten Generators für eine zweite Einheit der Gebäudeausrüstung durch Betreiben des generativen adversen Netzwerks basierend auf tatsächlichen Zeitreihendaten für die zweite Einheit der Gebäudeausrüstung umfasst.

7. Verfahren nach einem der Ansprüche 1 bis 6, wobei das Trainieren des Fehlervorhersagemodells unter Verwendung der synthetischen Zeitreihendaten das Einordnen einer Vielzahl von Sätzen der synthetischen Zeitreihendaten und das Auswählen eines am höchsten eingestuften Satzes aus der Vielzahl von Sätzen der synthetischen Zeitreihendaten zur Verwendung beim Trainieren des Fehlervorhersagemodells umfasst.

8. Verfahren nach Anspruch 7, wobei das Einstufen der Vielzahl von Sätzen der synthetischen Zeitreihendaten das Vergleichen der Vielzahl von Sätzen der synthetischen Zeitreihendaten mit historischen Trainingsdaten umfasst.

9. Verfahren nach einem der Ansprüche 1 bis 8,

wobei die automatisierte Aktion das Ändern eines internen Betriebs der Gebäudeausrüstung umfasst, um den Fehler zu korrigieren, zu mildern oder zu verhindern, und/oder
Ändern der Belastung der Gebäudeausrüstung, um den Fehler zu mildern oder zu verhindern, und/oder
Durchführen von Wartung an der Gebäudeausrüstung, um den Fehler zu mildern oder zu verhindern.

10. Ein oder mehrere nicht-transitorische computerlesbare Medien, die Programmanweisungen speichern, die, wenn sie von einem oder mehreren Prozessoren ausgeführt werden, den einen oder die mehreren Prozessoren veranlassen, Operationen auszuführen, umfassend:

- Trainieren eines bedingten Generators (904) durch Betreiben eines generativen adversarischen Netzwerks (900), das den bedingten Generator umfasst;

- Erzeugen synthetischer Zeitreihendaten, die einer Vielzahl von Fehlertypen entsprechen, durch den bedingten Generator, wobei Kennzeichnungen für die Vielzahl von Fehlertypen als Eingaben für den bedingten Generator verwendet werden und der Vielzahl von Fehlertypen entsprechen, die in den synthetischen Zeitreihendaten dargestellt werden sollen, wobei der bedingte Generator die Kennzeichnungen verwendet, um die synthetischen Zeitreihendaten zu erzeugen, die der Vielzahl von Fehlertypen entsprechen, die durch die Kennzeichnungen angegeben sind;

- Trainieren eines Fehlervorhersagemodells (808) unter Verwendung der synthetischen Zeitreihendaten;
und

- Vorhersagen eines Fehlers für Gebäudeausrüstung durch Anwenden des Fehlervorhersagemodells auf reale Zeitreihendaten, die sich auf die Gebäudeausrüstung beziehen, und

- Einleiten einer automatischen Aktion als Reaktion auf das Vorhersagen des Fehlers für die Gebäudeausrüstung.

11. Ein oder mehrere nicht-transitorische computerlesbare Medien nach Anspruch 10, wobei die Vorgänge ferner das Erzeugen einer Darstellung von vorverarbeiteten Trainingsdaten mit reduzierter Dimensionalität relativ zu den vorverarbeiteten Trainingsdaten durch einen Embedder umfassen, das Versuchen, die vorverarbeiteten Trainingsdaten aus der Darstellung durch eine Wiederherstellung zu rekonstruieren, und das Versuchen, durch einen Diskriminator zu unterscheiden, um zu bestimmen, ob die synthetischen Zeitreihendaten synthetisch sind.

12. Ein oder mehrere nicht-transitorische computerlesbare Medien nach Anspruch 11, die Vorgänge ferner umfassend:

- Empfangen der vorverarbeiteten Trainingsdaten durch den Embedder und den Generator;

- Bereitstellen der erzeugten Daten durch den Generator an den Diskriminator;

- Bereitstellen einer ersten Ausgabe an den Diskriminator durch den Embedder; und

- Bereitstellen einer zweiten Ausgabe für die Wiederherstellung durch den Embedder.

13. Ein oder mehrere nicht-transitorische computerlesbare Medien nach einem der Ansprüche 10 bis 12, wobei die Vorgänge ferner das Aktualisieren des Bedingungsgenerators für eine neue Einheit von Gebäudeausrüstung umfassen, indem das generative kontradiktorische Netzwerk basierend auf tatsächlichen Zeitreihendaten für die neue Einheit von Gebäudeausrüstung betrieben wird.

14. Ein oder mehrere nicht-transitorische computerlesbare Medien nach einem der Ansprüche 10 bis 13,

wobei das Trainieren des Fehlervorhersagemodells unter Verwendung der synthetischen Zeitreihendaten das Einordnen einer Vielzahl von Sätzen der synthetischen Zeitreihendaten und das Auswählen eines am höchsten eingestuften Satzes aus der Vielzahl von Sätzen der synthetischen Zeitreihendaten zur Verwendung beim Trainieren des Fehlervorhersagemodells umfasst;

wobei das Einstufen der Vielzahl von Sätzen der synthetischen Zeitreihendaten vorzugsweise das Vergleichen der Vielzahl von Sätzen der synthetischen Zeitreihendaten mit historischen Trainingsdaten umfasst.

15. Ein oder mehrere nicht-transitorische computerlesbare Medien nach einem der Ansprüche 10 bis 14, wobei die Vorgänge ferner die Milderung oder Verhinderung des Fehlers umfassen, indem ein interner Betrieb der Gebäudeausrüstung verändert wird, eine Belastung der Gebäudeausrüstung verändert wird oder eine Wartung der Gebäudeausrüstung veranlasst wird.

## Revendications

1. Procédé de prédiction de défauts dans un équipement de construction et de déclenchement d'actions correctives, le procédé comprenant :

- l'entraînement d'un générateur conditionnel (904) en faisant fonctionner un réseau antagoniste génératif (900) comprenant le générateur conditionnel ;
- la génération, par le générateur conditionnel, de données de séries temporelles synthétiques correspondant à une pluralité de types de défauts, dans lequel des étiquettes pour la pluralité de types de défauts sont utilisées comme entrées du générateur conditionnel et correspondent à la pluralité de types de défauts que l'on souhaite représenter dans les données de séries temporelles synthétiques, dans lequel le générateur conditionnel utilise les étiquettes pour générer les données de séries temporelles synthétiques correspondant à la pluralité de types de défauts indiqués par les étiquettes ;
- l'entraînement d'un modèle de prédiction de défauts (808) à l'aide des données de séries temporelles synthétiques ;
- la prédiction d'un défaut sur un équipement de construction en appliquant le modèle de prédiction de défauts à des données de séries temporelles réelles relatives à l'équipement de construction ; et
- le déclenchement d'une action automatisée en réponse à la prédiction du défaut sur l'équipement de construction.

2. Procédé selon la revendication 1, dans lequel le fonctionnement du réseau antagoniste génératif comprend en outre la création, par un intégrateur, d'une représentation de données d'entraînement prétraitées ayant une dimensionnalité réduite par rapport aux données d'entraînement prétraitées, la tentative, par une récupération, de reconstruire les données d'entraînement prétraitées à partir de la représentation, et la tentative, par un discriminateur, de discriminer pour déterminer si les données de séries temporelles synthétiques sont synthétiques.

3. Procédé selon la revendication 2, comprenant :

- la réception, par l'intégrateur et le générateur, des données d'entraînement prétraitées ;
- la fourniture, par le générateur, de données générées au discriminateur ;
- la fourniture, par l'intégrateur, d'une première sortie au discriminateur ; et
- la fourniture, par l'intégrateur, d'une seconde sortie à la récupération.

4. Procédé selon l'une quelconque des revendications 2 et 3, comprenant la possibilité, pour l'intégrateur, d'apprendre une dynamique temporelle à partir d'un espace latent.

5. Procédé selon l'une quelconque des revendications 1 à 4, comprenant l'utilisation, par le réseau antagoniste génératif, d'une perte reconstruite, d'une perte faiblement supervisée et d'une perte non supervisée.

6. Procédé selon l'une quelconque des revendications 1 à 5, dans lequel l'entraînement du générateur conditionnel est basé sur des premières données de séries temporelles réelles pour une première unité d'équipement de construction, le procédé comprenant en outre la mise à jour du générateur conditionnel pour une seconde unité d'équipement de construction en faisant fonctionner le réseau antagoniste génératif sur la base de données de séries temporelles réelles pour la seconde unité d'équipement de construction.

**7.** Procédé selon l'une quelconque des revendications 1 à 6,
dans lequel l'entraînement du modèle de prédiction de défauts à l'aide des données de séries temporelles synthétiques comprend le classement d'une pluralité d'ensembles de données de séries temporelles synthétiques et la sélection de l'ensemble le mieux classé parmi la pluralité d'ensembles de données de séries temporelles synthétiques pour une utilisation dans l'entraînement du modèle de prédiction de défauts.

**8.** Procédé selon la revendication 7,
dans lequel le classement de la pluralité d'ensembles de données de séries temporelles synthétiques comprend la comparaison de la pluralité d'ensembles de données de séries temporelles synthétiques à des données d'entraînement historiques.

**9.** Procédé selon l'une quelconque des revendications 1 à 8,

dans lequel l'action automatisée comprend la modification d'un fonctionnement interne de l'équipement de construction afin de corriger, d'atténuer ou de prévenir le défaut, et/ou
la modification d'une charge sur l'équipement de construction afin d'atténuer ou de prévenir le défaut, et/ou
la réalisation de travaux d'entretien sur l'équipement de construction afin d'atténuer ou de prévenir le défaut.

**10.** Un ou plusieurs supports non transitoires lisibles par ordinateur stockant des instructions de programme qui, lorsqu'elles sont exécutées par un ou plusieurs processeurs, amènent les un ou plusieurs processeurs à exécuter des opérations comprenant :

- l'entraînement d'un générateur conditionnel (904)
en faisant fonctionner un réseau antagoniste génératif (900) comprenant le générateur conditionnel ;
- la génération, par le générateur conditionnel, de données de séries temporelles synthétiques correspondant à une pluralité de types de défauts, dans lequel des étiquettes pour la pluralité de types de défauts sont utilisées comme entrées du générateur conditionnel et correspondent à la pluralité de types de défauts que l'on souhaite représenter dans les données de séries temporelles synthétiques, dans lequel le générateur conditionnel utilise les étiquettes pour générer les données de séries temporelles synthétiques correspondant à la pluralité de types de défauts indiqués par les étiquettes ;
- l'entraînement d'un modèle de prédiction de défauts (808) à l'aide des données de séries temporelles synthétiques ;
et
- la prédiction d'un défaut sur un équipement de construction en appliquant le modèle de prédiction de défauts à des données de séries temporelles réelles relatives à l'équipement de construction, et
- le déclenchement d'une action automatisée en réponse à la prédiction d'un défaut sur l'équipement de construction.

**11.** Les un ou plusieurs supports non transitoires lisibles par ordinateur selon la revendication 10, dans lesquels les opérations comprennent en outre la création, par un intégrateur, d'une représentation de données d'entraînement prétraitées ayant une dimensionnalité réduite par rapport aux données d'entraînement prétraitées, la tentative, par une récupération, de reconstruire les données d'entraînement prétraitées à partir de la représentation, et la tentative, par un discriminateur, de discriminer pour déterminer si les données de séries temporelles synthétiques sont synthétiques.

**12.** Les un ou plusieurs supports non transitoires lisibles par ordinateur selon la revendication 11, les opérations comprenant en outre :

- la réception, par l'intégrateur et le générateur, des données d'entraînement prétraitées ;
- la fourniture, par le générateur, de données générées au discriminateur ;
- la fourniture, par l'intégrateur, d'une première sortie au discriminateur ; et
- la fourniture, par l'intégrateur, d'une seconde sortie à la récupération.

**13.** Les un ou plusieurs supports non transitoires lisibles par ordinateur selon l'une quelconque des revendications 10 à 12,
dans lequel les opérations comprennent en outre la mise à jour du générateur conditionnel pour une nouvelle unité d'équipement de construction en faisant fonctionner le réseau antagoniste génératif sur la base de données de séries temporelles réelles pour la nouvelle unité d'équipement de construction.

**14.** Les un ou plusieurs supports non transitoires lisibles par ordinateur selon l'une quelconque des revendications 10 à 13,

dans lequel l'entraînement du modèle de prédiction de défauts à l'aide des données de séries temporelles synthétiques comprend le classement d'une pluralité d'ensembles de données de séries temporelles synthétiques et la sélection de l'ensemble le mieux classé parmi la pluralité d'ensembles de données de séries temporelles synthétiques pour une utilisation dans l'entraînement du modèle de prédiction de défauts ;
dans lequel le classement de la pluralité d'ensembles de données de séries temporelles synthétiques comprend de préférence la comparaison de la pluralité d'ensembles de données de séries temporelles synthétiques à des données d'entraînement historiques.

15. Les un ou plusieurs supports non transitoires lisibles par ordinateur selon l'une quelconque des revendications 10 à 14,
dans lequel les opérations comprennent en outre l'atténuation ou la prévention du défaut en modifiant un fonctionnement interne de l'équipement de construction, en modifiant une charge sur l'équipement de construction ou en réalisant des travaux d'entretien sur l'équipement de construction.

FIG. 1

10

108
110
106
112
114 116
112 116
114
130
112
114 116
104
120
102
100

to building from building

Heater Subplant

202

214

Hot Water Loop

222

220

224

242

Hot TES

210

230

from building

216

Cold Water Loop

236

212

244

Cold TES

244

Cold TES

228

206

Chiller Subplant

232

C C C C

226

HRC HRC HRC HRC

to building

234

Heat Recovery Chiller Subplant

204

208

Cooling Tower Subplant

238

240

Heat Exchanger (Heat Rejection)

Condenser Water Loop

218

FIG. 2

200

FIG. 3

FIG. 4

FIG. 5

FIG. 6

EP 4 254 114 B1

FIG. 7

FIG. 8

FIG. 9

FIG. 10

FIG. 11

FIG. 12

FIG. 13

EP 4 254 114 B1